# EUROPEAN PATENT SPECIFICATION

(11) **EP 1 412 080 B1**
(45) Date of publication and mention of the grant of the patent: **21.08.2013**
(21) Application number: 01939886.6
(22) Date of filing: 05.06.2001
(51) Int. Cl.: B01J 19/08, H05F 3/04, C02F 1/46

(54) **PRODUCTION OF COMBUSTIBLE GAS BY RECYCLING CONTAMINATED LIQUID WASTE**
PRODUKTION VON BRENNBAREM GAS DURCH RECYCLING VON KONTAMINIERTEN FLÜSSIGEN ABFÄLLEN
PRODUCTION DE GAS COMBUSTIBLE PAR RECYCLAGE DE RESIDUS LIQUIDES CONTAMINÉS

(30) Priority: 05.06.2000 US 586926
(43) Date of publication of application: 28.04.2004
(73) Proprietor: Zenon MG International Holdings LLC, Tarpon Springs FL 34689 (US)
(72) Inventor: SANTILLI, RUGGERO Maria, Palm Harbor, FL 34683 (US)
(74) Representative: Fioravanti, Corrado
(86) International application number: PCT/US2001/018082
(87) International publication number: WO 2001/094004

(56) References cited:
- US-A- 4 054 513
- US-A- 4 229 307
- US-A- 5 026 484
- US-A- 5 069 765
- US-A- 5 826 548

## Description

### BACKGROUND OF THE INVENTION

WO 01/10546 A1 discloses apparatus as defined in the preamble of claim 1. This carlier application discloses a novel efficient method for the recycling of liquid waste, which constitutes de facto a new process for their gasification, and consists in the conversion of contaminated liquids into clean burning combustible gases plus solid precipitates. The new process, called PlasmaArcFlow, is based on flowing the liquid waste through electric arcs between electrodes. This new process is dramatically more efficient than those disclosed in prior art, such as U. S. Patent nos. 603,058 to H. Eldridge; 5,159,900 to W. A. Dammann and D. Wallman; 5,435,274 to W. H. Richardson, Jr.; 5,417,817 to W. A. Dammann and D. Wallman; 5,692,459 to W. H.Richardson, Jr.; 5,792,325 to W. H. Richardson, Jr. Other apparatus is known form U.S. Patents No. 5,826,548 and No. 5,069,765.

The processes as per the latter prior art patents have the following main drawbacks which have prevented their being suitable for industrial and consumer applications: 1) the gas produced is environmentally unacceptable, because, according to numerous measurements, its exhaust contains 4% to 8% more carbon dioxide than fossil fuel exhaust; 2) the gas produced is industrially unacceptable, because, also according to various measurements, its production rate is excessively slow due to the burning by the arc of the hydrogen and oxygen back to water, as illustrated by the typical large glow of underwater arcs; and 3) the gas produced is financially unacceptable, because, also according to numerous measurements, the commercial efficiency of the processes is excessively small, that is, the energy in the combustible gas is a fraction of the electric energy used for its production, thus implying excessive costs.

The new process as disclosed in WO01/10546 A1 has resolved all the above drawbacks. In fact, the PlasmaArcFlow removes the CO from the arc immediately after its formation, by therefore preventing its oxydation by the arc itself into C02, and by decreasing the C02 content of the exhaust to about 1/3 that of fossil fuel exhaust, and to about 1/4 that of the exhaust of the gas per pre-existing patents, as established by repeated measurements. Moreover, magnegas is forced at the 3871°C (7,000 degrees F) of the electric arc, and, as such, cannot have any hydrocarbon in its structure. It then follows that magnegas has no carcinogenic substances in the exhausts. Finally, magnegas is a fabricated combustible fuel which, as such, can have pre-set features, such as a positive oxygen balance, namely, the percentage of oxygen in the exhaust is bigger than the oxygen needed for its combustion. All these and other factors render magnegas the environmentally best combustible fuel available today.

A second important advancement of WO01/10546 A1 is that, thanks to the flow of the liquid waste through the electric arcs, rather than its being stationary as per the preceding patents, the production rate is increased dramatically, such as the production of 22.6 to 25.5 m3/h (800 to 900 cubic feet per hour) with an equipment powered by a 50 kWh DC electric generator, thus rendering magnegas mature for industrial applications.

The third advancement of WO01/10546 A1 is that the equipment has been established by independent automotive laboratory, MOTORFUELERS, INC. of Largo, Florida, to have a commercial over-unity of about two, that is, per each unit of electric energy measured at the panel, the equipment produces at least two units of energy in the combustible gas.

It should be stressed that the above over-unity is referred to the commercial energy balance, that is, the ratio between the energy produced and the energy paid for its production, which is the electric energy as measured and verified at the panel. The scientific energy balance is always smaller than one due to the conservation of the energy, and it is given by the ratio between the total energy output, and the total energy input, the latter being the sum of the electric energy plus the energy in the liquid molecules. The energy in the liquid molecules is not considered in the commercial energy balance because the recycling of liquid waste brings an income, rather than costing money. The elimination of the molecular energy of the liquid in the energy balance then yields a commercial over-unity. The above distinctions between the commercial and scientific energy balances also apply to nuclear reactors, which are indeed commercially overunity for very large values, in the sense that the energy produced by a nuclear reactor is a large multiple of the electric energy used for its operation.

We can, therefore, say that the nuclear reactors invented by Enrico Fermi in the 1940's are capable of tapping energy from nuclei, while the PlasmaArcFlow reactors discovered by this inventor are capable of tapping energy from molecules.

Unfortunately, nuclear reactors are not environmentally admissible, because they release very harmful radiation, and leave very radioactive waste. On the contrary, according to independent certifications by RADIATION PROTECTION ASSOCIATES, of Dade City, Florida, the reactors of this invention emit no harmful radiation, and leave no radioactive waste of any type, while producing a clean burning gas.

U. S. Patent No. 6,540,966 discloses that the gas produced by the invention of WO01/10546 A1 is composed by a completely new chemical species scientifically called electromagnecules, and industrially called magnecules due to the dominance of magnetic over electric effects, which is the only new chemical species discovered after the identification of molecules in the 19th century. In essence, the atoms and molecules constituting magnegas are exposed to the very intense magnetic and electric fields of the arc, which cause a magnetic polarization of the orbits of the valence and other electrons from a spherical to a toroidal space distribution, resulting in the creation of magnetic moments. The individual atoms constituting magnegas then act like small magnets, thus permitting the magnetic bonding of atoms and molecules into clusters. Numerous Gas Chromatographic Mass Spectrometric measurements have verified the new chemical species of magnecules. In particular, magnecules results to be readily detectable by said Mass Spectrometric equipment, in which they appear as massive peaks, although without any Infrared Signature. The latter feature then establishes the lack of valence character of the bond. Therefore, the bond can only be of electromagnetic character. Numerous other anomalous features have verified the dominance of the magnetic over the electric origin of the bond.

Therefore, this invention of the new equipment for the production of magnegas implies, not only a new process for the over-unity production of a combustible gas via electric arcs between electrodes within liquid wastes, but also a completely new chemical structure of the combustible gas itself.

U. S. Patent No. 6,540,966 discloses new methods for the bonding together magnetically liquids that are normally soluble, as well as different liquids, or liquids and solids, that do not mix, such as oil and water, or water and carbon. This new process produces in clusters that are detectable via with Liquid Chromatographic Mass Spectrographic Equipment as massive peaks, yet they possess no Infrared Signature. The latter experimentally verified occurrence establishes the lack of valence origin of the bond and consequential novelty of the new chemical species of magnecules also in liquids, called magneliquids. The latter invention is evidently very important to improve the efficiency of the overall process for the gasification of liquid wastes, because it permits the flowing through the arc of magnetically bonded liquid wastes, or liquids and solids, with consequential dramatic increase in the efficiency and energy content of the gas produced.

In summary, the invention of the equipment for the over-unity production of the environmentally acceptable magnegas as per the above related three Patent Applications implies: 1) a basically new process for the production of combustible gas from liquid wastes, the PlasmaArcFlow process; 2) a basically new chemical species of the gas produced, the magnegas; and 3) a basically new chemical structure in the liquid used for the production of magnegas, the magneliquids.

### SUMMARY OF THE INVENTION

The invention described herein consists of means for a dramatic increase of the commercial over-unity of the PlasmaArcFlow Reactors, not only for the production of magnegas, but also for the additional production of a second clean energy, usable large heat acquired by the magneliquid during the production of magnegas. Thanks to the indicated large over-unity, as well as the availability of a second income producing source of usable energy, the equipment of this invention permits the production of an environmentally acceptable gas usable in any fuel application which is, for the first time, cost competitive with respect to the cost of available fuels.

This invention includes: a new process for flowing the liquid waste through electric arcs; independently certified, total, commercial over-unity of at least 5 for reactors served by 50 Kwh electric power generators when operating at atmospheric pressure, and a commercial over-unity of at least 30 when the reactor operates under pressure; a new reactor for the first, experimentally proved, over-unity separation of the water; other new reactors for the total recycling of liquid waste which cannot even partially disposed in the environment, into a usable clean burning gas, a usable large source of heat, and solid precipitates usable for industrial applications; yet other new reactors for recycling biologically contaminated liquid waste, such as town, municipal, farm, industrial or consumer sewage, for the over-unity production of usable combustible gas, nutrient rich water usable for irrigation, and solid precipitates usable as fertilizers.

With the clear understanding, repeated again, that the scientific energy balance will be always smaller than one due to the principle of conservation of the energy and uncontrollable losses due to friction, a commercial energy balance bigger than one as. the ratio of the energy produced and the sole electric energy used for its production, called over-unity, has been certified by MOTORFUELERS, INC. for the PlasmaArcFlow Reactor. In fact, repeated measurements have established that one cubic foot of magnegas which contains an absolute minimum of 0.175 kWh (600 BTU) can be produced with about 90 W = 307 BTU of electric energy measured at the panel, thus yields an over-unity of the order of two. The missing energy evidently originates from the molecules of the liquid itself, from the crystal of the carbon rod used as consumable anode, and from other sources.

A primary objective of this invention is to identify novel equipment capable of an increase of the above over-unity by at least a factor of five. In fact, the PlasmaArcFlow Reactors of this invention have been independently certified to have an over-unity of five when operating at atmospheric pressure under a 50 kWh electric generators. Over-unity of 7 has been measured when operating the reactor at pressures of the order of 138 kPa (20 psi). Bigger over-unities are reached when using bigger electric generators, bigger flows, and bigger pressures.

The financial implications of large over-unities is that they permit the industrial production and sales of magnegases at a cost competitive over that of available fossil fuels. In turn, such a cost competitiveness has important environmental implications for our planet, besides permitting the United States of America, or any other Country, to achieve fuel independence, by producing an environmentally acceptable fuel anywhere desired.

Car dealers, automotive service stations, municipalities, industries, farms, and any other entity releasing liquid waste is turned by this invention into a producer of clean fuel at a competitive price via an equipment which has essentially the dimension of a desk.

These dramatic results are permitted, not by empirically trying to put together levers, tanks, and the like, but by systematic scientific research initiated by this inventor in the late 1970's which permitted the construction of a generalization of quantum mechanics under the name of hadronic mechanics, which permits numerical representations verifiable with experiments of events caused by linear, local, potential, and unitary interactions, as permitted by quantum mechanics for an electron in an atomic orbit, plus contact, nonlinear, nonlocal, nonpotential, and nonunitary interactions beyond any dream of representation by quantum mechanics, as experienced by the same electron when experiences high resistive contact forces while moving within the hyperdense medium in the core of a star.

The research underlying this invention was conducted at all possible scientific levels, including chemistry, plasma physics, nuclear physics, particle physics, superconductivity, and other fields.

In fact, a DC electric arc within liquids first decomposes the liquid molecules into their atomic constituents, thus requiring realistic chemical models of molecular bonds according to hadronic chemistry, which has been the first one to reach a representation of molecular binding energies and other molecular characteristics correct to the seventh digit. This essentially exact representation was reached via the introduction of a new attractive bond between valence electrons pairs in singlet coupling into a quasi-particle called isoelectronium, where the attractive force originates from the contact, nonlinear, nonlocal, nonpotential and nonunitary effects due to the deep overlapping of the wavepackets of the electrons. Conventional molecular models according to quantum chemistry still miss about 2% of binding energies. The missing amount is deceptively small, because in reality 2% of the binding energy of the water molecule corresponds to about 950 Kcal/mole, while the conventional chemical reaction of hydrogen and oxygen into water implies about 20 Kcal/mole.

Therefore, quantum chemistry implies an error in research for the separation of the water which is about 50 times the thermodynamical energy released by its creation, thus being basically unsuited for any scientific study of underwater electric arcs. The achievement of a broader formulation of chemistry capable of achieving an essentially exact representation of molecular binding energy has an evident paramount importance for this a main part of this invention, the achievement of the first over-unity separation of the water into hydrogen and oxygen, from which al, over overunities follows. The necessary prior discovery of hadronic chemistry also explains the impossibility in its absence to even predict the indicated over-unity, thus explaining the reason why this invention was not discovered by others.

Following the decomposition by the electric arc of molecules into atoms, the same electric arc ionizes said atoms, that is, strips the atoms of their peripheral electrons due to collisions with a very large number of high energy electrons of the electric current. In this way, the electric arc creates in its immediate vicinity a plasma at about 3871°C (7,000 degrees F) composed of nuclei of the atoms composing the original liquid, plus protons and electrons. Conventional plasma physics is unsuited to represent such a plasma because it treats all constituents as points, and represents their collision via the so-called external terms C, resulting in equation of motion for the matrix density D of the type idD/dt = (A, H, C) = AH-HA + C, where H is the operator representing the total energy. The above time evolution is afflicted by catastrophic physical and mathematical inconsistencies due precisely to the external term C. Prior to this invention, this inventor had to construct first hadronic plasma physics with main equation idD/dt- (A, H) = ARH-HSD where R and S are matrices representing the nonspherical-deformable shapes of the particles as well as their nonpotential interactions, which resolves the above inconsistencies, as also proved in the above quoted scientific paper, thus permitting for the first time in scientific history consistent and meaningful calculations in which the constituents of a plasma at small mutual distances are represented as they actually are in the reality, extended-deformable bodies with potential, action-at-a-distance, as well as contact nonpotential interactions due to collisions. Again, the prior discovery of hadronic plasma physics is of paramount importance for this invention, and its absence explains the reason why this invention was not reached by other inventors.

Water is known to be one of the best electric insulators. Yet, under an electric arc, the resistance of water collapses to values of the order of fractional Ohms, which low value of the resistance further decrease with the increase of the Kwh. It is evident that, under these conditions, the electric arc within water is one of the best known superconducting conditions at high temperature. Conventional quantum superconductivity is structurally unable to represent such conditions, because of its notorious lack of capability to represent the structure of one Cooper pair, that is, the experimentally established attraction between identical electrons at short distances against their Coulomb repulsion, so strong to form bonded electron pairs which even tunnel together through a potential barrier. In fact, quantum superconductivity can only represent an ensembles of a large number of Cooper pairs, but not the structure of one individual Cooper pair.

Hadronic superconductivity has permitted the resolution of this additional impasse thanks to the representation of the bonding of valence electrons into the isoelectronium, which is indeed a molecular version of the Cooper pair in superconductivity. The studies herein reported have permitted for the first time in scientific history a quantitative representation of the superconducting character of the electric arc within water, as being composed of a current of mostly paired electrons, rather than individual electrons.

It is evident that the prior discovery of the superconducting character of the electric arcs within water, and the capability by hadronic superconductivity for their quantitative scientific representation, has been of paramount importance for the present invention of the first over-unity separation of water, evidently due to the minimal energy absorption under superconducting conditions.

Upon having achieved a quantitative-numerical understanding of the decomposition of molecules, the formation of the arc plasma, and the superconducting conditions of the electric arc within water, the next scientific research has been that of controlling the various reactions in the recombination of said plasma following its cooling due to the PlasmaArcFlow. In fact, the flow of the liquid waste to be recycled through the electric arc, pushes said plasma away from the arc on a continuous basis. Following the displacement of said plasma from the immediate vicinity of the electrodes tips, estimated to be a displacement of the order of 0.31 cm (1/8"), the plasma instantly cools down because the surrounding liquid is relatively very cold, implying a transition from 3871°C (7,000 degrees F) to about 93°C (200 degrees F).

In this cooling process we have in the order: 1) a number of nuclear reactions from stable isotopes plus protons and electrons into stable isotopes, thus without any emission of dangerous radiation or release of dangerous waste; 2) the reconstruction of the atomic structure by all ionized atoms via the capture of electrons from the environment, a natural process known as electron capture; and 3) the subsequent formation of conventional chemical reactions; 4) the formation of atoms and molecules with a magnetic polarization of the orbits of the valence electrons, due to the presence of the very intense magnetic fields of the electric arc, with consequential formation of the magnecules indicated earlier; 5) the magnetic polarization of internal valence electrons, with consequential formation of new magnetic bonds within the structure of conventional molecules.

The above five different processes imply the creation by the PlasmaArcFlow Reactors of this invention of two different forms of clean, usable energies, a clean burning combustible gas, and a large amount of heat acquired by the liquid used in the reactor, which can be easily utilized via heat exchanges, radiators, and other means. It should be noted that the very presence of such heat is a proof of the commercial over-unity of this invention, evidently because it is an indication of an excess energy produced by its underlying processes, besides the production of the combustible gas. the achievement of industrially meaningful over-unities is then reduced to a question of maximizing the conditions for the production of heat, which, for a given PlasmaArcFlow Reactor, are given by the proper selection of the liquid to be recycled, possible additive, and the conductor selected for the consumable anode. It should be finally noted that, while the combustible gas is the product of molecular processes, the heat acquired by the liquid originated by processes at all levels, including the particle, nuclear, molecular, plasma and superconductivity levels.

For the case of the separation of the water via the PlasmaArcFlow Reactor with carbon anode, the cooled down plasma is formed by atoms of hydrogen, oxygen and carbon. Due to the much bigger affinity of carbon and oxygen, as compared to those of hydrogen and oxygen or hydrogen and carbon, the carbon instantly removes all available oxygen by forming the combustible gas CO. The PlasmaArcFlow then prevents CO to be oxidized by the electric arc into C02. When the impurity in the water and in the carbon rod are ignorable, and under the maximal possible use of the PlasmaArcFlow, the resulting magnegas is composed of a mixture essentially 50% of H2 and 50% CO. For the total recycling of liquid waste of fossil fuel origin, such as automotive antifreeze and oil waste, the principal constituents of magnegas remain H2 and CO, although in different proportions, such as 40% H2, 50% CO. 5% 02 and the remaining components being inert gases.

The combustion of available fuels can be compared to the firing of a single stage rocket, because the fuel is generally made of one single molecule with one single reaction. The combustion of magnegas can instead be compared to a multistage rockets, because its combustion is based on a sequence of different reactions. In fact, in the combustion of magnegas as a flame in atmosphere or in an internal combustion engine, we have first the burning of the hydrogen with the atmospheric oxygen, called the trigger combustion, because the latter triggers the decomposition of the CO with a large release of oxygen.

The combustion exhaust of the magnegas from pure water composed 50% of H2 and 50% 02 are therefore made of water vapor in approximately 60%, 20% carbon in solid form, 4% to 6% C02, the balance being given by atmospheric gases, including nitrogen and possible impurities. In this way, magnegas exhaust has no carcinogenic or other toxic substances, contains from 1/2 to 1/3 the C02 of fossil fuel exhaust, and the oxygen balance is essentially is negative for the amount of oxygen in the 02, yet dramatically less than the alarming oxygen depletion caused by the combustion of fossil fuels, currently running at the equivalent of about 72 billion of oil barrels per day.

The exhaust of magnegas produced by the recycling of contaminated liquid waste are considerably better than that from the separation of the water, due to the large increase of the C02 content. In fact, the exhaust is given by about 50% water vapor, 20% carbon in solid form, 15% oxygen, 4% to 6% C02, and the rest is given by atmospheric gases. The main advantage is a clearly positive oxygen balance which has a paramount importance to replenish the oxygen in our planet.

In conclusion, magnegas is the environmentally best available fuel, which can be used in any application currently served by fossil fuels, including metal cutting, heating, cooking, automotive and truck uses. Moreover, thanks to the advances of this invention identified below, magnegas can now be produced and sold at a cost which is competitive with respect to available fuels.

As a specific example, the PlasmaArcFlow Reactors for the total recycling of liquid waste built according to the specification of this invention, particularly the specifications based on the continuous extrusion of the anode via coal, produce magnegas at the total cost of $ 0.178/m³ (0.005/cf), excluding the income from the recycling of liquid waste. The additional PlasmaArcFlow Reactors of this invention for the recycling of liquid sewage imply no direct cost at all for the production of magnegas, since the income for the recycling of sewage is sufficient to cover all operating costs, including electricity, amortization of the purchase price, service, personnel, overheads, etc. As a result, both the total and sewage hadronic recyclers of this invention permit the sale price of magnegas at $ 0.54/ m³ (0.015/cf) which is competitive with respect to the price of gasoline on a mileage comparative basis.

The above remarkable features imply a dramatic changes in the current industrial organization for the production and sales of fuel. In fact, at this moment, the production of fuel is the monopoly of a few giant multinational companies. By comparison, the PlasmaArcFlow Reactors of this invention for the total recycling of liquid waste permit, for the first time, automotive service stations, car dealers, or consumers to be producer of the environmentally best fuel at a competitive price. Similarly, the PlasmaArcFlow Reactors of this invention for the recycling of liquid sewage permit towns, cities, municipalities, or any other producer of liquid waste to become producer of the environmentally best fuel at a competitive price. The significance of this invention for Earth and the human society is then evident.

As indicated earlier, magnegas constitutes the smallest energy produced by PlasmaArcFlow Reactors. The biggest energy they produce is heat. As numerical examples, the PlasmaArcFlow Reactors which have been built according to the embodiments of this invention for the total recycling of automotive antifreeze or oil waste have a commercial over-unity of 2 in the production of magnegas and of 3 in the production of heat when operating at atmospheric pressures. When the same reactors operate at 138 kPa (20 psi) pressure we have an over-unity of 3 in the production of magnegas and of 5 in the production of heat.

As also indicated earlier, the heat produced by the PlasmaArcFlow Reactors is acquired by the liquid waste during its recirculating flow through the electric arc, and can be utilized by separately flowing said liquid waste in an outside radiator, heat exchanger, or other conventional utilization of heat. For this reason, PlasmaArcFlow Reactors according to this invention generally have two different and independent recirculating systems individually served by pumps, one for the flowing of the liquid waste through the electric arc, and a separate one for the flowing of the same liquid waste through an outside heat utilization system.

Extensive experimentation and tests have established that the PlasmaArcFlow Reactors have a bigger efficiency when the liquid waste is hot as compared to the same operation when the liquid waste is kept cold. Therefore, all PlasmaArcFlow Reactors are operated at a minimal temperature of the liquid waste which depends on the desired application.

When operating at atmospheric pressure, the PlasmaArcFlow Reactors of this invention for the total recycling of liquid waste are run at a constant liquid waste temperature of about 82°C (180 degrees F), while all heat in excess of that temperature is utilized with said external systems. In this case, the PlasmaArcFlow Reactors can be used as heaters of rooms or of buildings either via radiators with fans directly connected to the reactors as indicated above, or via the use of the reactors to heat up water via heat exchangers which hot water is then pumped through conventional heater in individual rooms.

The PlasmaArcFlow Reactors of this invention can also be used to produce steam. This application is achieved by operating the reactors at pressures of 103 to 138 kPa (15 to 20 psi) for the recycling of liquid waste such as automotive antifreeze or oil waste, in which case said liquid waste can be kept at the minimal temperature of 204°C (400 degrees F) without boiling, while dissipating via a heat exchanger all heat in excess of said temperature. Since, under the above conditions, the heat exchanger operates at a temperature bigger than the boiling temperature of water, the PlasmaArcFlow Reactor can indeed produce steam in a continuous basis.

Such a new source of steam has novel applications of dramatic importance. Recall that the PlasmaArcFlow Reactors have three different sources of income: 1) the income from the recycling of liquid waste; 2) the income from the sale of magnegas; and 3) the income from the production of heat. In general, only two of these income is more than sufficient to pay for all operating costs of the reactors, including electric energy, amortization of purchase price, personnel, service, overheads, taxes, etc.

As a result, the PlasmaArcFlow Reactors of this invention, when operating at high pressure for the recycling of liquid waste with revenues from the recycling of the liquid waste itself and the sale of magnegas, constitute a cost-free source of steam. In turn, the availability of a cost-free steam has dramatic novel applications, such as: I) the production of heat with a cost-free energy source; 2) the production of electricity via a steam generators, again, with a cost-free source of the steam; or 3) desalting sea water with conventional evaporation equipment, again, without any cost of the energy source.

Alternatively, the PlasmaArcFlow Reactors of this invention can be operated with the income from the recycling of liquid waste plus the income from the use of heat, in which case the magnegas is produced at no direct cost.

At any rate, accurate measurements of costs have established that the PlasmaArcElow Reactors build according to the embodiment of this invention, particularly that based on the automatic extrusion of the anode from coal presented in detail below, has a total operating cost under continuous usage at atmospheric pressure of $ 0.005 for the production of a minimum of 0.175 kWh (600 BTU) contained in one cubic foot of magnegas and 0.293 kWh (1,000 BTU) of heat acquired by the liquid waste. This implies the operating cost of $ 3.12 for the total production of 293 kWh (1,000,000 BTU) less the income from the recycling of the liquid waste, which is the lowest cost of energy production ever recorded. Dramatic reduction of costs for the production of 293 kWh (1,000,000 BTU) below the cost of $ 3.12 occur for the operation of the same reactors under pressure, as presented in details below.

All the above results have been reached first on scientific grounds via the use of hadronic mechanics at various levels of study. These studies have established that the electric arc between electrodes within liquids is a source of virtually unlimited clean energies, whose practical utilization is only limited by available technology. The scientific background of this invention has been that of achieving a credible, scientific, numerical representations of the main processes identified above, identifying their laws, and, only as a final stage, identifying the embodiments which optimize said physical conditions, laws and geometries, yet are feasible with current technologies.

Due to the importance of the background hadronic mechanics for the conception, prediction, and actual design, the PlasmaArcFlow Reactors of this invention are also called hadronic reactors, where the term hadronic is intended to indicate the crucial dependence of the reactors on the subnuclear, contact, nonlinear, nonlocal, nonpotential, and nonunitary effects due to deep overlapping of the wavepackets of particles, which overlapping occur in the molecular structures used by the reactors, the separation and ionization of the same molecular structure by the electron of the arc current, the resulting plasma of nuclei, protons and electrons, the recombination of the latter following their flow outside the arc, and other levels.

Some of the primary reasons for the indicated unlimited character of the commercial over-unity of hadronic reactors are the following. The electric discharge is dramatically favored over other processes for molecular separation, because it acts on valence pairs in singlet bonding, resulting in an ionization energy dramatically lower than that predicted by quantum chemistry in which the valence electrons are not paired, as recalled earlier. Secondly, the availability of singlet valence pairs automatically implies the existence of a superconducting conditions, thus explaining the very low absorptions of electric energy by the arc following its initiation. These two processes alone make available energies which are estimated to be at least ten times the original electric energy.

An additional source of energy, per se sufficient to reach virtually unlimited over-unities, depends on the proper selection of the liquid waste to be recycled and its possible additives, so as to permit stimulated nuclear transmutations from light stable isotopes into light stable isotopes, such as the synthesis of nitrogen from carbon, protons and electrons, and other nuclear syntheses.

The third additional source of energy, also sufficient per se to reach virtually unlimited over-unities, is due to the several novel means for storing energy in magnegases, which energies are then released in their combustion, and include:
1) Conventional chemical energy released during combustion due to exothermic chemical reactions; 2) Anomalous energy release due to the fact that the magnetic polarization of valence electrons orbits renders atoms better ready for their combination into valence bonds, as combined to their conventional state with spherical rotational symmetry; and 3) The storage of additional energy inside conventional molecules as indicated earlier, which energy is also released during combustion.

This inventor has established with actual measurements on working equipment a number of ways to increase the commercial over-unity. The first way is that via the increase of the pressure in the reactor itself. In essence, when the reactor operates at atmospheric level, the production of magnegas is almost explosive since we have the conversion of one unit of volume of the liquid into about 1,800 units of volume of the gas, as per established knowledge in the transition of state from liquids to gas. It then follows that the production of the gas displaces the liquids, and the arc occurs for about 60% of the time within the gas, rather than within the liquid, with manifest limitation of the efficiency.

The increase of the pressure in the reactor implies the corresponding proportional decrease of the size of the bubbles of magnegas produced, with corresponding increase of the period of time the arc occurs within the liquid, and evident, corresponding increase of the efficiency. As illustrations, the operation of the hadronic reactors at 138 kpa (20 psi) implies the decrease of the size of the magnegas bubbles of at least one tenth, with an over-unity increase of about 50%, while an operating pressure of 1379 kPa (200 psi) is expected to imply a reduction of the magnegas bubbles of the order of 1/100th, with a fivefold increase of the over-unity.

A second way to increase the over-unity is that via the increase of the electric energy. This is due to the property that the volume of magnegas produced is directly proportional to the gap between the electrodes. Unlike the case of electric arcs in air, the gap of electric arcs within liquids can be appreciably increase only with the increase of the kWh.

Numerous tests have therefore established that the commercial over-unity increases with the increase of the electric energy in a nonlinear way which is less than the linear proportion, that is, the doubling of the electric energy yields more of the original over-unity, but less than double its value.

Yet another way to increase the over-unity is to increase the flow of the liquid through the arc. In fact, the faster the flow of the liquid through the arc, the bigger the volume of magnegas produced. In fact, the large glow of underwater arcs originates from the burning of hydrogen and oxygen back to water immediately following their creation, as triggered by the arc itself. For the case of stationary arcs within water according to the prior art patents quoted earlier, about 80% of the gases produced by the arcs burn back to water. The PlasmaArcFlow of this invention reduces such a waste, as established also by the dramatic reduction of the arc glow, as well as by the dramatic increase of efficiency. Therefore, the increase of the flow of the liquid through electric arcs increases the volume of magnegas produced per given electric energy, thus increasing the commercial over-unity of the reactors.

It should be stressed that, for a number of technical or practical limitations, it is impossible to utilize with current technology all the energies produced by electric arcs within liquids, and reach unlimited values of the commercial over-unity. The first limitation is the impossibility to utilize all the gases produced by said underliquid arcs, because the increases of the flow beyond a threshold value for each given electric energy extinguishes the arc itself.

Additional limitations are due to the known impossibility to increase the electrodes gap for a given value of the electric energy, the lack of availability of conductors practically usable as electrodes for very large electric energies, and other factors.

Despite these limitations presented here for accuracy as well as for credibility, this inventor has build hadronic reactors currently operating on a continuous basis at an overunity of 5 for operation at atmospheric pressure, with an over-unity of about 10 when operating at pressures of 138 kPa (20 psi), and reactors operating at high pressures with over-unities from 30 to 50 are under construction.

Hadronic reactors have built by this inventor according to the specifications further described below, which are completely automatic, including the automatic initiation, control and optimization of the electric arc, and the automatic reloading of the consumable carbon rods. Particular care has been devoted to the conception and construction of these reactors to minimize waste of electric energy when propagating in electrodes of low conductivity, such as carbon electrodes. This increased efficiency has been achieved via copper cables of large current capacity delivering the electric current to copper bushing sliding under pressure on the carbon rods at a position as near as practically possible to the electric arc.

By recycling automotive antifreeze waste, these reactors achieve the following independently certified performance:
1) DC electric power at 100% duty cycle of 68 kWh (= 233,965 BTU/h);
2) Electric arc between 1.9 cm (3/4") diameter electrodes of 1200 A and 40 V = 48 Kwh at the arc corresponding to an efficiency at the DC converter of about 70% ;
3) Operation at atmospheric pressure;
4) Production of about 22.6 m³/h (800 cf/h) of magnegas when using antifreeze waste with a BTU content of an absolute minimum of 6.25 kWh/ m³ (600 BTU/cf), corresponding to the production of 141 kWh (480,000 BTU/h);
5) Production of about 205 kWh (700,000 BTU/h) of heat in the magneliquid used via a heat exchange. The above measurements yield a commercial over-unity of about 5.06 = (205 kWh+141 kW)/68.5 Kw [(700,000 BTU/h + 480,000 BTU/h)/234, COO BTU/h], thus proving the validity of the scientific discoveries underlying this invention, as outlined above.

The operation of the same hadronic reactor as described above, but operating at the pressure of 20 psi produces the following commercial energy balance:
1) DC electric power at 100% duty cycle of 68 kWh = 233,965 BTU/h ;
2) Production of about 34 m3/h (1, 200 cf/h) of magnegas when using antifreeze waste with a BTU content of an absolute minimum of 6.25 kWh/m³ (600 BTU/cf), corresponding to the production of 211 k W (720,000 BTU/h);
3) Production of about 293 kW (1, 000,000 BTU/h) of heat in the magneliquid.

The latter measurements yield a commercial over-unity of about 7.35 = (211 kW+293 kW)/68.5 kW [(720,000 BTU/h + 1, 000,000 BTU/h)/234, 000 BTU/h].

It should be stressed that the above measurements are, very accurate in regards to measurements of used electric energy from the panel achieved via an independently calibrated cumulative wattmeter, but the same measurements are very conservative in regard to the energy content of the gas and the heat produced by the reactor. In fact, the use of conventional calorimeters has not permitted a credible measurement of the BTU content of magnegas due to its numerous magnetic and other anomalies. The value of 6.25 kWh/m³ (600 BTU/cf) used in the above calculations is, therefore, a lower bound estimate. In reality, magnegas produced from antifreeze waste cuts metal twice faster than acetylene, which has an energy content of 24 kWh/m^{3 (}2,300 BTU/cf). Moreover, a Honda Natural Gas Vehicle converted to magnegas produced from antifreeze waste has proved that the performance of the automobile running on magnegas is at least equal to the performance of the same vehicle running on natural gas.

Assuming on a more realistic basis that magnegas has the same energy content of natural gas, which corresponds to about 11 kWh/m³ (1,050 BTU/cf), the preceding two over-unities of 5.06 and 7.35 are increased to 6.58 and 9.96, respectively.

It should be indicated that bigger values of the overunity occur when using liquid waste of higher energy content, such as automotive oil waste enhanced with sugar waste and/or other organic substances.

It should be finally indicated that the operation of the above indicated reactors with tap water has established the achievement of a main objective of this invention: the overunity separation of the water into hydrogen and oxygen with the PlasmaArcFlow Process, the production of usable magnegas with the indicated new chemical species under the use of a carbon-base anode, and the production of usable heat. In fact, numerous tests have established that the replacement of the antifreeze waste with tap water implies a decrease of the efficiency of about 20, which nevertheless remain over-unity of 4 when operating at atmospheric pressure, with bigger overunities when operating at bigger pressures, bigger electric energy, and bigger flow.

In summary, this invention establishes the achievement with current technology of a commercial over-unity of 30 via the use of hadronic reactors served by 300 Kwh, operating at 1379 kPa (200 psi), and with a PlasmaArcFlow of about 113 m³/h (3000 g/h), and the recycling of liquid waste of fossil origin kept at the constant temperature of 204°C (400 degrees F) via a heat exchanger. Over-unities of this size permit the production of magnegas essentially at no cost, except for routine expenditures for to storage and transportation. In fact, the income from the utilization of the heat, plus the income from the recycling of the liquid waste are bigger than the total operating costs of the reactors, including costs for electric energy, service, amortization of the purchase, personnel, overheads, taxes, etc. Alternatively, hadronic reactors with such large commercial over-unities provide new means for the cost-free production of steam except for routine costs for heat exchanger and their service, since the incomes from the same of magnegas plus the income from the recycling of the liquid waste are bigger than the total operating costs of the reactor. In turn, the availability of steam at no cost of the energy for its production permits revolutionary new application, such as the production of electric energy via steam-driven conventional electric generators, or the desalting of sea water via conventional evaporating means at no cost of the heat.

Above all, the ultimate meaning of the hadronic reactors of this invention, that of tapping energy from the molecular structure of liquids, is expressed by reactors capable of self-sustaining themselves, that is of producing the fuel for their own operation, while producing additional usable energy. By recalling that fuel powered electric generators have a very low efficiency of the order of 30%, selfsustaining reactors occur when the commercial over-unity in the production of magnegas it at least 4. In this case the magnegas produced by the reactor can be used to power a DC electric generator which, in turn, powers the reactor itself. The heat produced by the reactor is the additional energy available at no cost. If the over-unity in the production of magnegas is bigger than 4, as it is the case for large high pressure hadronic reactors, then all magnegas in excess of the over-unity 4 can be used for other applications, jointly with the heat produced. Equivalent self-sustaining reactors occur in the use of steam to power electric generators, in which case a minimal over-unity of 4 in the heat produced is sufficient to produce the electric power needed for the operation of the reactor, while all magnegas produced is available on a cost-free basis. Again, over-unities bigger than 4 in the production of heat renders available on a cost-free basis all magnegas produced plus the heat in excess of said over-unity of 4.

Additional novel applications are the following. First, the hadronic reactor above described are particularly suited to produce a clean burning combustible fuel from crude oil in a way which is environmentally, logistically, and financially more advantageous than currently used refineries. The environmental advantages are evident from the preceding analysis. The logistic advantages are also evident because, refineries notoriously require large area, thus requiring the oil to be shipped to them, while the hadronic reactors of this invention are light and mobile, and can therefore be shipped directly to the oil well. The financial advantages are equally evidence, due to the over-unity of the hadronic reactors, with consequential negative operating costs, as compared to the very high operating costs of refineries.

Yet another important application is the use of sea water as liquid in the reactors. In this case the gas produced has high energy content due to the various elements in the sea water, and the heat acquired by the liquid is consequently high. Hadronic reactors working on sea water can then be used for a variety of applications, including a new method of desalting sea water via steam obtained through heat exchanges.

Another application of the above hadronic reactors is in the recycling of dense liquid waste of animal origin. In fact, the liquid waste can be recirculated through the electric arc until all bacteria are eliminated, as well as until that point in which all bacteriological contaminants are based, thus no longer in solution in the water, at which point the contaminants can be removed with a centrifuge or a filter. This applications produced an excellent, clean burning combustible fuel, heat acquired by the liquid waste, solid precipitates usable for fertilizers, and residual water good for irrigation.

Still another application of the above reactors in that for the complete recycling of paints, paints residues, heavy industrial waste, and other wastes, all total recycling occurring at a cost competitive price over pre-existing recycling means, due again to the over-unity of the process.

The above description refers to total hadronic recyclers, that is, reactors for the complete recycling of liquid waste which cannot be disposed in the environment not even in pan.

A second class of recyclers permitted by this invention is that for the partial recycling of liquid waste, that is, the removal of contaminants for the production of a usable final liquid. A representative application among several possible ones is that for the recycling of biologically contaminated waters, such as city, town, farms, industrial or consumer sewage, into: 1) clean burning magnegas; 2) solid precipitates useful for fertilizers; and 3) nutrients rich water usable for irrigation. The latter reactors are also called linear hadronic recyclers, to denote the single passage of the liquid waste though the arc without recirculation.

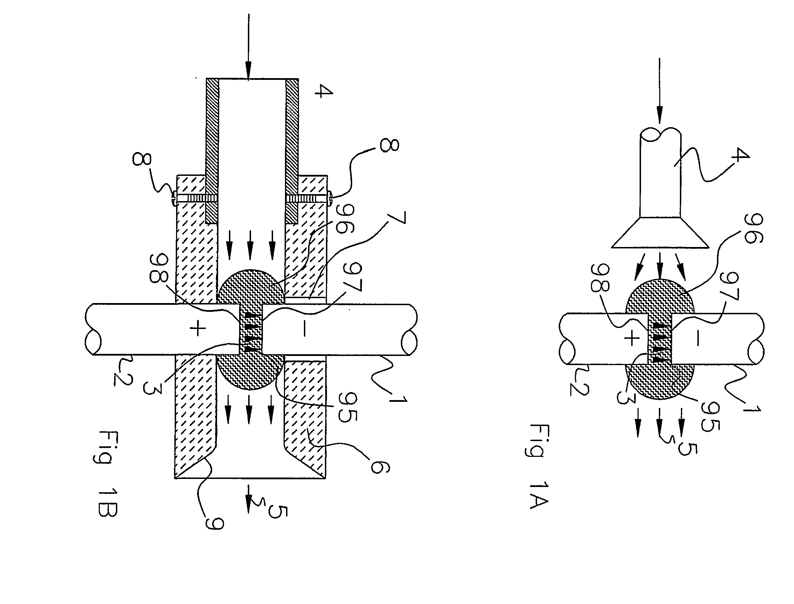

The main aspects of this new recycling process is the following. Thanks to the use of a venturi as per Fig. 1B which is further described below, the sewage is forced to pass through the immediate vicinity of the incandescent electrode tips, thus being exposed to a temperature of about 3871 °C (7,000 degrees F), the extremely intense light of the electric arc; electric current of 1,000 A and more, the very strong electric and magnetic fields associated to said electric current, and other factors. These combined conditions completely eliminate any bacteria in the original sewage by therefore rendering the liquid sterile. Jointly, the original organic substances are partially decomposed into volatile and solid substances, and partially baked into sterile, nutrient rich substances in solution or suspension in the water. The degree of purity of the final water suitable for irrigation is then turned into technical features suitable to meet the requirement by environmental regulatory agencies, including appropriate filtering, if requested.

It should he stressed that, as far as farmers are concerned, there is the clear need of reducing filtration at an absolute minimum, evidently upon achieving complete sterilization of the original biological contaminants. In fact, the elimination of nutrient rich substances produced by the linear hadronic reactor implies the requirement that farmers have to purchase instead chemical fertilizers, which are environmentally much less desirable, besides being more expensive. At any rate, an important advantage of the sewage recycling by this invention is that the nutrient rich water suitable for irrigation qualify for organic produce, thus permitting crops of higher quality, since the original biocontaminants are of human or animal origin.

Extensive tests and experimentation, as well as chemical analyses conducted by independent laboratories, have established the capability by a linear hadronic reactor powered by 50 Kwh to render sterile liquid sewage with about 5% biological contaminants at the rate of about 3.8 m³/h (1,000 g/h). A complete recycling station contemplates the use of a minimum of three reactors put in series with individual bypasses, so as to permit the servicing of one station while the other two are operational. In this way, the linear hadronic recycler has one primary reactor for the sterilization of the biological contaminants, plus one second identical station as a safety backup, the third station being useful to further refine the final irrigation water.

In the event that more than 3.8 m³/h (1,000 g/h) are needed, the above described three linear hadronic reactors can be put in parallel in any desired numbers. The increase of the electric power over 50 Kwh also permits an increase of the flow of recycled sewage. In this way, this invention permits the recycling of small flow of sewage of the order of 3.8 m³/h (1,000 g/h) or very large flow of the order of 3875 m³/h (1,000,000 g/h) via a suitable combination of linear hadronic reactors in series, for the desired quality of the final irrigation water, as well as ion parallel, for the desired flow of recycling, under an electric power per station which can be computed depending on the desired flow.

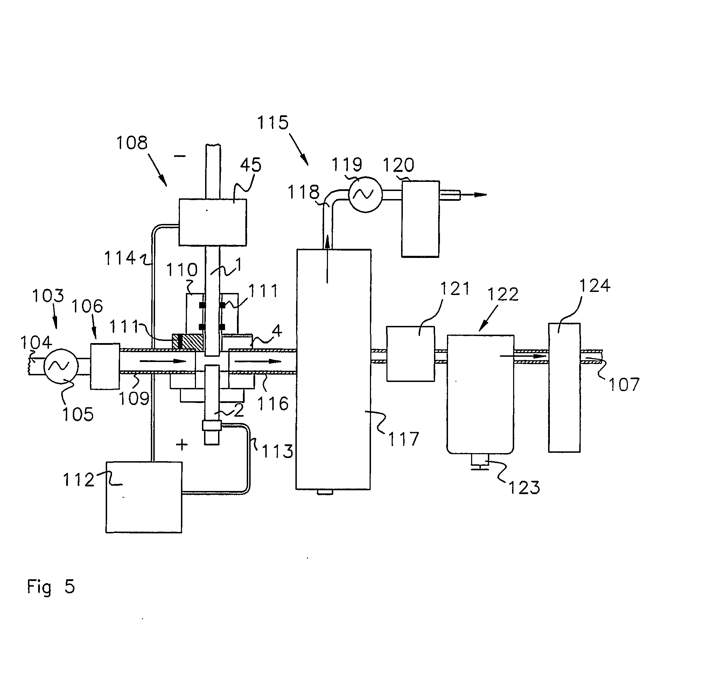

It should be noted that the biological contaminants present in city sewage generally are of the order of 5%, as indicated above. Very heavy sewage as available in farms can also be recycled with the technology of this invention in a two-fold way. First, by processing them without dilution in the total hadronic recyclers of Figs. 1A, 1B, 1C, 2A, 2B, 2C, 2D, 2E, 3, and 4, that is, by recirculating them until all biological contaminants are recycled and the liquid is sterilized. Second, the same dense liquid sewage can be recycled with the linear hadronic reactor of Fig. 5 following dilution of their concentration with tap water, and/or increase of electric power delivered to the arc proportionate to the increase of the contaminants percentage.

The advantages of the above novel sewage recycling process over recycling processes currently used in cities ands municipalities are dramatic. First, there is a large economic advantage because, as further described below, the cost of operating the linear hadronic recycler over those of pre-existing methods is indeed dramatic, since large volumes of magnegas as well as of irrigation water are produced as byproducts, thus being free. Second, there is the dramatic advantage of eliminating all the malevolent odors which are typically near current sewage recycling plants, since the recycling process is completely internal with no outlet other than sterile and odorless irrigation water. Third, the large sedimentation areas needed by current sewage treatment plants, and generally located in prime land location, are completely eliminated, thus permitting the urban use of said large sedimentation areas, also in view of the elimination of the odor. Fourth, there is no longer any need to bring the entire sewage of a city to a single collection area, due to the smallness of the linear hadronic recycler, which have essentially the size of a desk when powered by 50 Kwh, thus permitting the location of several recycling stations throughout the city, with great advantages for the local availability of irrigation water, as well as for the elimination of the obnoxious sewage backups and overfills. Fifth, when new villages are now built during the normal process of urban expansion, the first duty of cities and municipalities is that of spending millions of dollars to connect said new villages to the main sewage treatment plant. The latter large expenditures is completely eliminated, since the linear hadronic reactor of this invention can be placed anywhere, thus rendering said new village completely independent in regard to the sewage recycling and irrigation water. Along the same lines, the construction of houses or village at high elevation is prohibited now because of technical difficulties as well as the prohibitive cost of building a sewage connecting pipe going up to high elevation in a rocky soil, while the same village can now be built at a much smaller price, since the linear hadronic recycler can indeed work at any elevation.

The operating costs for the sewage PlasmaArcFlow recycler are the following. Suppose that the recycler is composed by three PlasmaArcFlow stations each possessing a DC power supply of 50 kWh, with electrodes composed by a nonconsumable thoriated tungsten anode of 5.1 cm (2") in outside diameter and 7.6 cm (3") in length and consumable anodes of 1.9 cm (3/4") outside diameter made of cheap coal. In this case, the total operating costs of the reactor are of the order of $ 11.50 per hour, of which $ 9.00 is considered to be an average cost of electricity over a daily and nightly use, and $ 2.50 refers to all remaining costs, including those for cheap coal rods, amortization of the purchase price over 15 years use, service, personnel assumed to overview more than one reactor, and overheads. The above linear recycler can process about 11.3 m³ (3,000 gallons) of sewage per hours, yielding a cost of $ 3.83 per 3.8 m³ (1,000 gallons) of sewage, which cost is fully competitive over the current costs of recycling sewage in various cities and municipalities.

Jointly, the above linear hadronic recycler produces magnegas at the rate of 68 m³/h (2,400 cf/h), since the rate is 22.6 m³/h (800 cf/h) per each PlasmaArcFlow station, as well as about 45.4 kg (100 pounds) per hours of solid precipitates useful for fertilizers, and 11.3 m³ (2,999 gallons) of irrigation water per hour, since the volume of liquid converted to gas and solid precipitates is very small according to well known physical laws. Since the current costs for recycling sewage are more than sufficient to cover the cost of operating the linear hadronic reactor, the production of magnegas, solid precipitates and irrigation water is free of direct cost, thus achieving a virtually unless source of environmentally acceptable fuel at a price which is competitive over all available fuels.

In conclusion, this invention provides the very first, actually constructed, reactors for the total recycling of liquids, whether contaminated liquid waste or ordinary fresh, well and sea water, or for the partial recycling of liquid sewage, all possessing a large commercial over-unit which has been certified by independent laboratories. The reactors of this invention for the total recycling of liquids produce a combustible gas with the environmentally best available exhaust and heat usable via conventional heat exchangers, at a cost dramatically competitive over that of any other available energy. The reactors of this invention for the recycling of biologically contaminated waters produce a clean burning combustible gas, nutrient rich water usable for irrigation, and solid precipitates usable for fertilizers. Since the current cost for sewage treatment are sufficient to cover the operating costs of the sewage hadronic recycler, the clean burning combustible gas and the nutrient rich waster useful for irrigation are both produced at no cost. Thus, this invention provides the first known unlimited source of energies in the form of fuel and heat which are truly acceptable for the environment, while being dramatically less expensive than available energies.

### BRIEF DESCRIPTION OF THE DRAWINGS

For a fuller understanding of the nature and objects of the invention, reference should be made to the following detailed description, taken in connection with the accompanying drawings, in which:
Fig. 1A depicts the PlasmaArcFlow process of WO01/10546 A1;
Fig. 1B depict a preferred embodiment of the improved PlasmaArcFlow of this invention, in which the liquid to be recycled flows first through the plasma surrounding the electric arc, and then through the electric arc itself;
Fig. 1C depicts an alternative embodiment called ArcPlasmaFlow, in which the liquid to be recycled flows first through the electric arc, and then through the plasma surrounding the latter;
Fig. 1D depicts a systems of PlasmaArcFlows connected in series;
Fig. 1E depicts a system of PlasmaArcFlows connected in parallel;
Fig. 2A depicts a preferred embodiment for tan automatic PlasmaArcFlow Reactor of this invention for the total recycling of contaminated liquid waste;
Fig 2B depicts submerged copper contacts delivering the negative polarity of the electric current to the anode as closed as possible to the electric arc to minimize losses;
Figs 2C and 2D provide different views of the automatic control of the electric arc;
Fig 2E depicts an equipment for the automatic reloading of carbon rods;
Fig 3 depicts a new equipment for the extrusion of the anode directly in the PlasmaArcFlow Reactor via the use of coal and bonding agent;
Fig. 4 depicts a Reactor, which is not part of the invention, for the total recycling of the liquid waste; and
Fig. 5 depicts a preferred embodiment for an automatic, PlasmaArcFlow Reactor for the recycling of biologically contaminated waters.

### DETAILED DESCRIPTION OF THE DRAWINGS

We present below the preferred embodiments of this invention in all possible construction details for the industrial realization of all features described above.

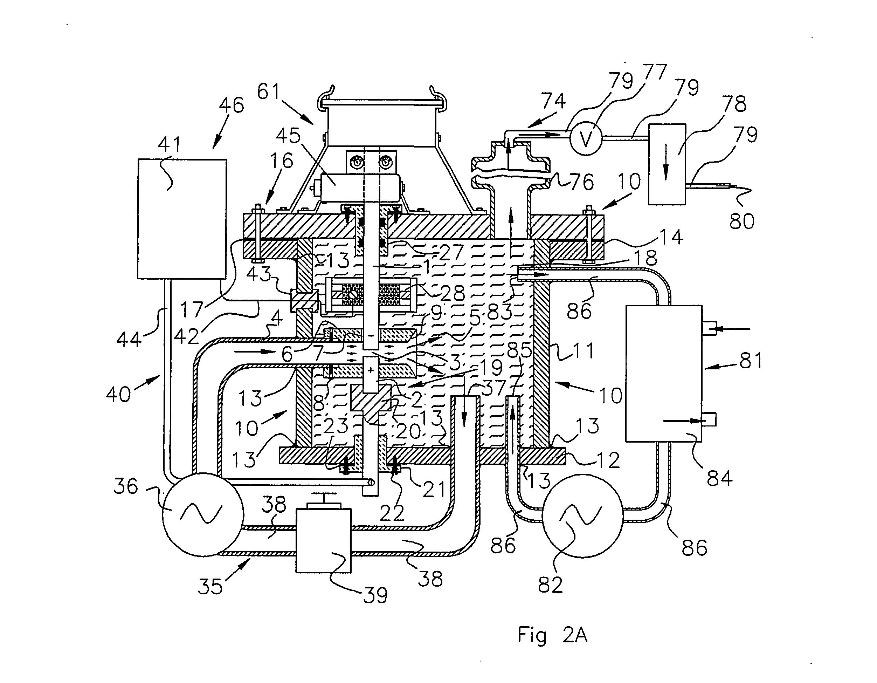

Referring now to the drawings, Fig. 1A depicts the main principle of the PlasmaArcFlow of WO01/10546 A1, consisting of two electrodes 1,2 of about 1.9 cm (3/4") in diameter which are immersed within the liquid waste to be recycled shown in the subsequent embodiment of Fig. 2A, which liquid is contained in the interior of a metal vessel also shown in the subsequent embodiment of Fig. 2A. A DC electric arc 95 is made to occur in between the tip 97 of the anode I and the tip 98 of the cathode 2, the electrons moving from the positively charged tip 98 toward the negatively charged tip 97, said electric arc 95 being powered by a 50 Kwh DC power source (not shown in Fig. 1A for simplicity) with a gap 3 designating the distance between the tips 97,98 of the electrodes 1,2 which is generally of the order of 118"for a 50 Kwh DC power source. Fig. 1A also depicts the plasma 96 surrounding the tips 97,98 of the electrodes 1,2, which essentially consists of an area having the natural geometry of a spheroidal ellipsoid with semiaxes of about 1.27 cm x 1.27 cm x 2.54 cm (1/2" x 1/2" x 1") created by the incandescent character of the tips 97,98 under the electric arc 95, and generally composed by a mixture of gaseous and liquids components at temperature the of order of 3871 °C (7,000 degrees F). The recycling of the liquid waste occurs by flowing the liquid via a pump 36 forcing the liquid through pipe or tube 4 thus forcing the liquid to pass through the plasma 96 surrounding the tips of the electrodes 1,2 and through the electric arc 95 with gap 3, and then ending with the outlet flow 5. This embodiment constitutes the PlasmaArcFlow process which decomposes the molecules of the liquid to be recycled into gaseous and solid elements. The recombination of the gaseous elements into a combustible gas is controlled by the flow itself, while solids precipitate at the bottom of a reactor where they are periodically collected for industrial and other usages.

The invention, which constitutes a substantial improvement of the proceeding one, is depicted in Fig. 1B, which comprises the same electrodes 1,2, related tips 97,98, related gap 3, the electric arc 95 through said gap 3, the plasma 96, and the 50 Kwh DC power unit of Fig. 1A. The main novelty is constituted by the fact that the tube 4 through which the liquid to be recycled is forced to move by a pump, ends in a tube 6 of insulating material, such as ceramic, hereinafter called venturi, which has the following main features: 1) the venturi 6 encompasses the tips 97,98 of the electrodes 1,2; 2) the venturi 6 has the approximate interior diameter of about 2.54 cm (1") for electrodes with 1.9 cm (3/4") diameters, about 7.6 cm (3") in outside diameter, and about 12.7 cm (5") in length; 3) the venturi 6 has 0.16 cm (1/16") clearance 7 for the electrodes 1,2 to move freely in and out the venturi 6; 4) the venturi 6 is locked into the tube 4 by fasteners, such as screws 8; and 5) the venturi 6 ends with a smooth curve 9 to minimize turbulences. After being forced to pass through said venturi 6, the liquid waste then exit with outlet flow 5.

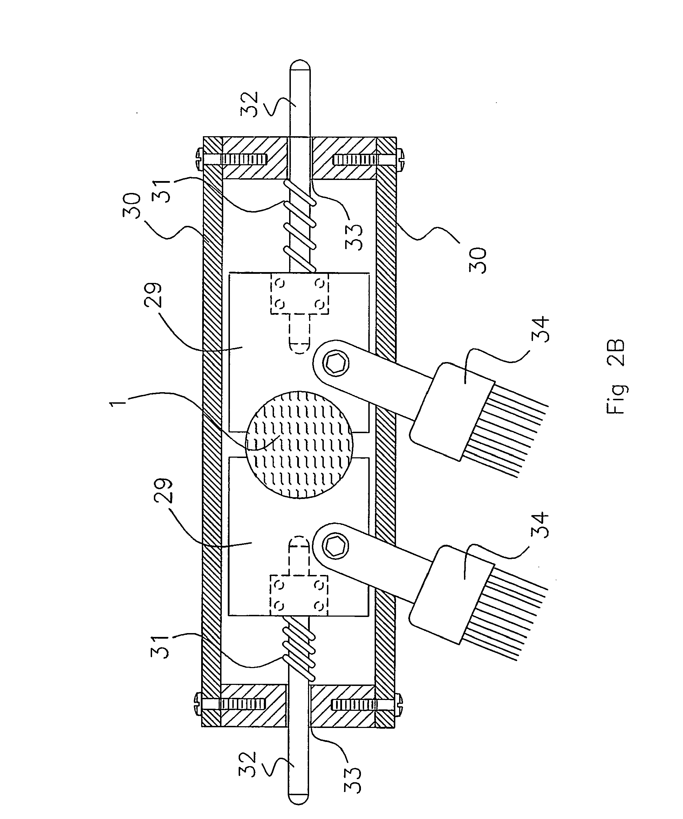

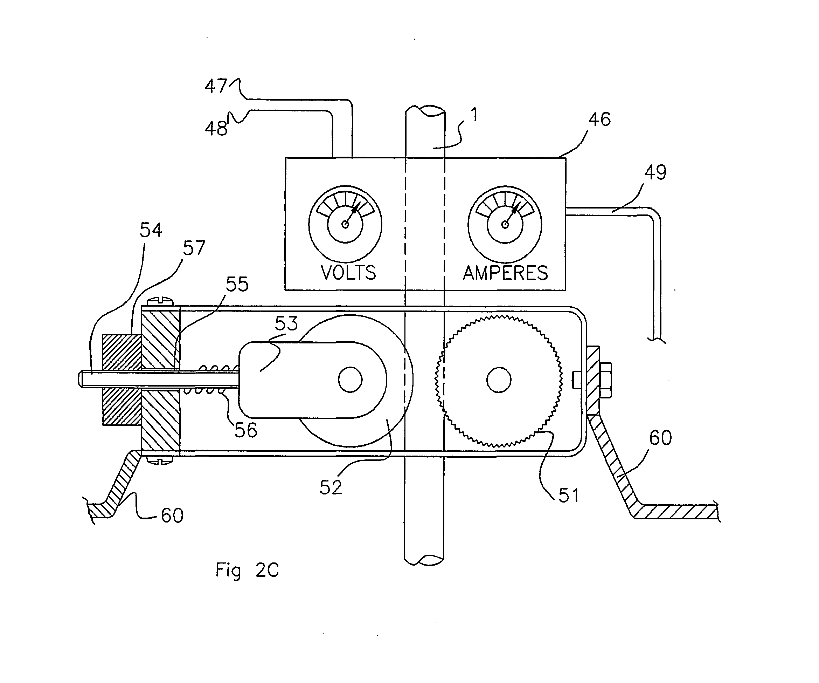

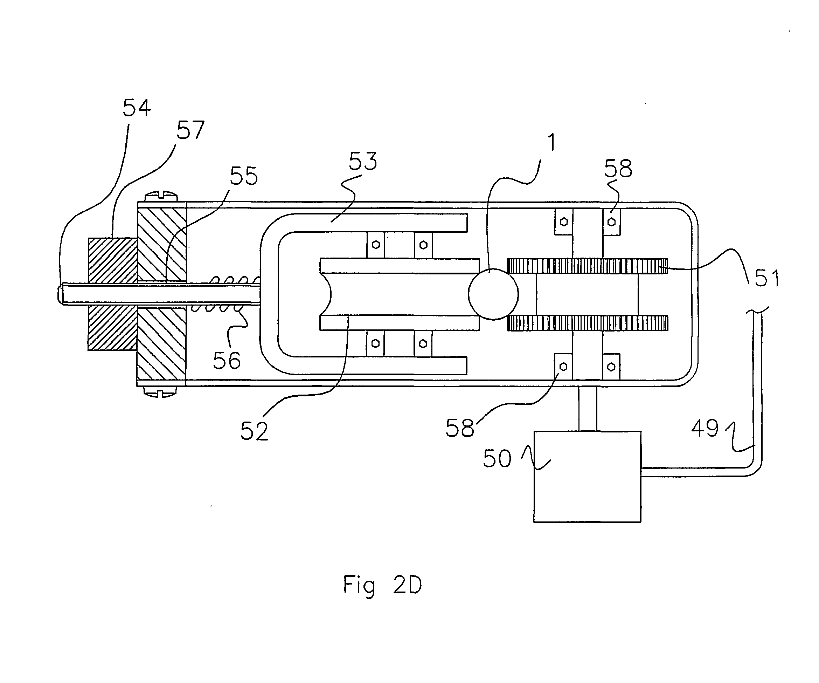

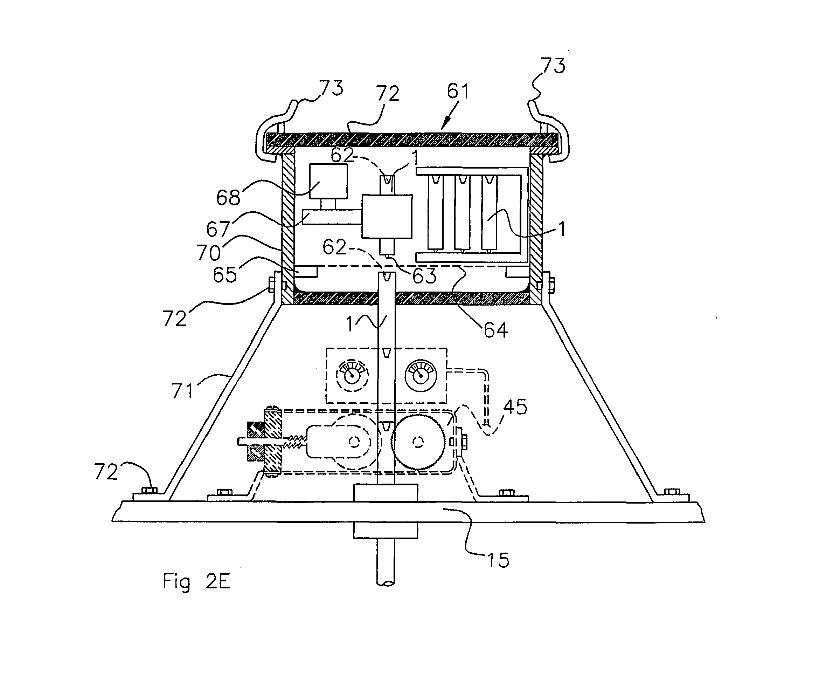

The advantages of the PlasmaArcFlow embodiment of Fig. 1B over the embodiment of Fig. 1A are several, and include: 1) assurance that the entire liquid is exposed to the plasma 96 surrounding the tips 97,98 of the electrodes 1,2, which exposure is evidently absent for the embodiment of Fig. 1A ; 2) assurance that the liquid to be recycled does indeed pass through the gap 3 of the electric arc 95 due to the evident back-up pressure created by the venturi 6, which assurance is also absent for the embodiment of Fig. 1A, particularly for the small gap distances occurring under small electric powers; and 3) dramatic increase of the efficiency in the recycling of the liquid waste, not only because of the preceding properties 1) and 2), but also because of the reduction of turbulences in the motion of the liquid.

In view of these advantages, the PlasmaArcFlow according to the venturi 6 of Fig. 1B permits practical application which are simply impossible for the PlasmaArcFlow of Fig 1A.

One of them is the recycling of liquid waste, which attains full sterilization with one single pass when using the venturi 6 of Fig. 1B. In fact, for the case of Fig. 1B the entire liquid sewage is forced to pass through the plasma 96 having 3871°C (7,000 degrees F), plus an extremely intense light, electric current of 1,000 A and more, very large electric and magnetic fields, all factors which assure the instantaneous termination of all bacteriological activities. By comparison, only part of the liquid sewage is exposed to all these factors when the PlasmaArcFlow of Fig. 1A is used, thus preventing its practical and industrial application for the case here considered. Needless to say, proportionately larger interior diameters of the venturi 6 are needed for larger electrode diameters ; the interior shape of the venturi 6 can have a variety of geometries, such as an ellipsoidal, rather than a cylindrical sectional area; and the end shape of the venturi 6 can have a variety of different curves to minimize turbulences.

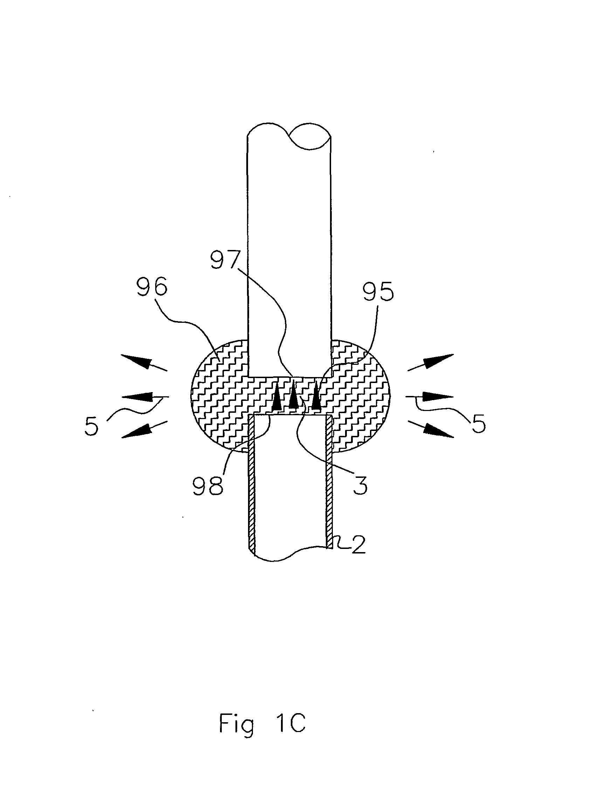

Fig. 1C depicts an alternative embodiment, called ArcPlasmaFlow, comprising an anode 1 served by a conventional carbon rod of 1.9 cm (3/4") diameter and 30.5 (12") length with end tip 97 ; a hollow cathode 2 of the approximate shape of a cylinder of 1.9 cm (3/4") outside diameter and 1.27 cm (1/2") inside diameter with end tip 98, the gap 3 in between the tips 97,98 of the electrodes 1,2, the electric arc 95 in between said tips 97,98, and the plasma 96 surrounding the electrodes tips 97,98. The liquid to be recycled is flown through the interior of the cathode 2, by therefore being forced to pass first through the arc 95 and then through the plasma 96, resulting in this way in the indicated ArcPlasmaFlow process.

An improvement of the above embodiment is given by a hollow anode 1 with the same cylindrical dimensions of the cathode 2, although such a configuration is not necessary for carbon or coal rods because, even though being made of a solid rod acting on a hollow cylindrical cathode 2, such solid anode 1 is completely consumed by the electric arc 95 when attempting to penetrate within the hollow cathode irrespectively of whether said anode 1 is a solid rod or a hollow cylinder.

The ArcplasmaFlow of Fig. 1C is preferable over the PlasmaArcFlow of Fig. 1B in a number of cases where exposure of the liquid waste is needed first to the electric arc, e. g., to cause given chemical reactions and decomposition, prior to the passage of the same liquid waste through the plasma 96.

The alternative ArcPlasmaFlow will be tacitly implied as applicable to all embodiments considered below, whenever needed.

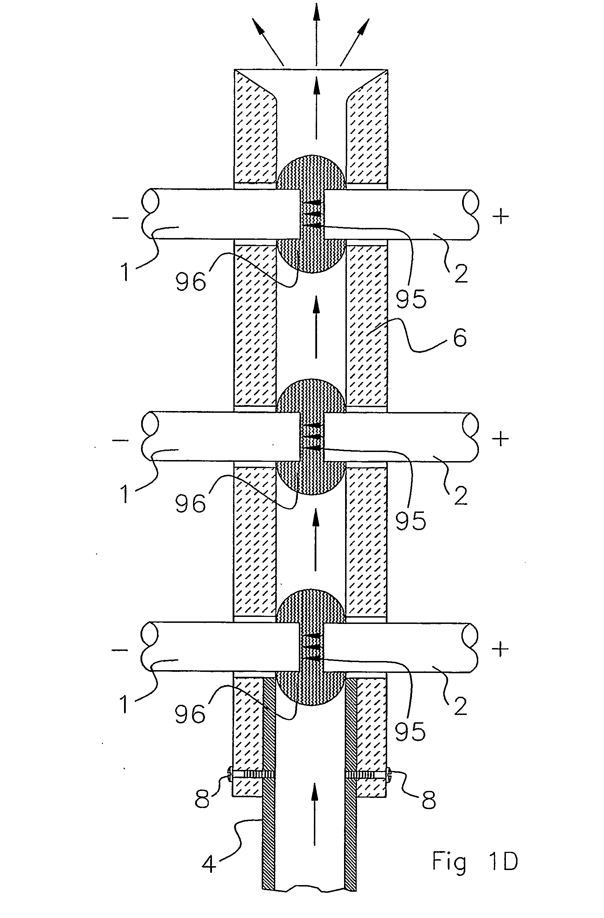

Fig. 1D depicts a representative case of three PlasmaArcFlows with the flow of the liquid waste connected in series. In this case the liquid waste flows through the one single inlet pipe 4, and then passes through a series of three plasmas 96 with the corresponding series of three electric arcs 95 all enclosed within the same venturi 6. This embodiment evidently implies a three-fold increase of the recycling processes of one single PlasmaArcFlow, while the flow remains the same as that of one single PlasmaArcFlow. It should be noted that, according to tests and experimentations, the electric arcs 95 can be powered in the following three different ways: 1) all three electric arcs are in series powered by one single DC electric generator, in which case the first negative polarity is connected to the electric generator, the first positive polarity is connected to the second negative polarity, the second plosive polarity is connected to the third negative polarity, and the final positive polarity is connected to the DC electric generator; 2) all three electric arcs are connected in parallel from one single DC electric generator, in which case all three negative polarity are individually connected to said generator, and all three positive polarities are individually connected to said electric generator; and 3) the electric arcs are individually powered by three different DC electric generators, one per each electric arc.

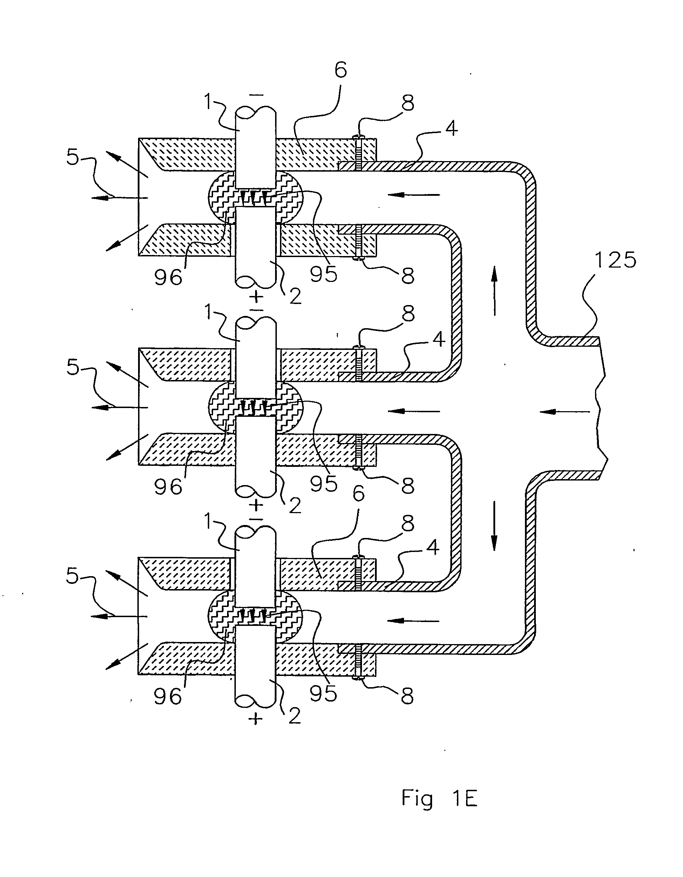

Fig. 1E depicts a representative case of three PlasmaArcFlows with the flow of the liquid waste connected in parallel. In this case the liquid waste flows through the one single inlet pipe 125, which is then divided into three separate pipes 4, each one having its own venturi 6 encompassing the individual electric arcs 95 and plasmas 96. This embodiment evidently implies a three-fold increase of the recycling flow of one single PlasmaArcFlow, by keeping the same recycling processes of one PlasmaArcFlow. It should be noted that, according to tests and experimentations, the sequence of electric arcs 95 can be powered in the following three different ways: 1) all three electric arcs are in series powered by one single DC electric generator, in which case the first negative polarity is connected to the electric generator, the first positive polarity is connected to the second negative polarity, the second positive polarity is connected to the third negative polarity, and the final positive polarity is connected to the DC electric generator; 2) all three electric arcs are connected in parallel from one single DC electric generator, in which case all three negative polarity are individually connected to said generator, and all three positive polarities are individually connected to said electric generator; and 3) the electric arcs are individually powered by three different DC electric generators, one per each electric arc.

Figs. 2A, 2B, 2C, 2D, 2E depict preferred embodiments of the hadronic reactors for the over-unity total recycling of liquid waste, or the over-unity decomposition of the water, which is based on the improved PlasmaArcFlow by the venturi 6 of Fig. 1B, and consists of the following main components.

(NOTE: All dimensions provided are approximate and reflect a typical application of the invention only. Similarly, although stainless steel or steel may be mentioned below as a preferred material, other materials are contemplated):
MAIN CLOSED VESSEL ASSEMBLY, as in Fig. 2A here collectively designated 10, comprising a stainless steel cylindrical sidewall 11 of about 0.63 cm (1/4") thickness, about 91 cm (3') diameter and 30.5 cm (1') height, with bottom base 12 consisting of a stainless steel flange of 1.27 cm (1/2") thickness and 91 cm (3') and 30.5 cm (1") in outside diameter fastened to said tube 1 by welding 13 or other means, the vessel being completed by the stainless steel ring 14 of 1.27 cm (1/2") thickness and 99 cm (3'3") in outside diameter fastened to said tube 1 by welding 13 or other means, plus a top 15 composed by a stainless steel disk of 1.27 cm (1/2") in thickness and 99 cm (3'and 3') in outside diameter, which is fastened into the flange 14 via bolts 16, while gasket 17 assures the complete sealing of the interior chamber under pressure, said main vessel 10 being completely filled up with about 15 g of liquid waste 18 to be recycled.
ELECTRODES ASSEMBLY, as in Figures 2A and 2B here, collectively denotes 19, comprising the vertically placed, stationary, nonconsuming cathode 2 composed by a tungsten rod of about 5.1 cm (2") in outside diameter and about 7.6 cm (3") in length, houses into a copper holder 20 which protrudes below and outside the base 12 of the vessel and it is insulated electrically from the latter by the nonconducting bushing 21 made of phenolic or other nonconducting material, fastened to the base 12 with screws 22 with interplaced gasket 23 for complete sealing under pressure, said bushing 21 having the shape and dimension so as to allow no distance less than 2.54 cm (1") between the cathode holder 20, and the metal'base 12; plus a consumable anode 1 composed by a 1.9 cm (3/4) commercially available, carbon rods of 30.5 (12") in length, which are interlocking for continuous use, and which penetrates into the main metal vessel assembly 10 vertically from the top IS through bushing 24 having fastened to top 15 via screws 25 with interlocking gasket 26 and seals 27 to ensure containing the pressure inside the vessel, as well as to prevent leaks of the liquid waste 18 to the outside, said carbon rod passing through a contact assembly 28 for the delivery of the negative polarity of the electric current to the anode 1, more particularly described in Fig. 2B, with reference to which the assembly comprises two copper contacts 29 of approximately 5.1 cm (2") in length measured along the axis of anode 1, 2.54 cm (1") in thickness, and 2.54 cm (1") in width, which are permitted to slide inside an encompassing copper box 30 of about 0.6 cm (1/4") in thickness, which forces said copper contacts 29 against said carbon rod 1 via springs 31, the copper contacts 29 being held in location by respective shafts 32 sliding inside the encompassing casing 30 through 0.08 cm (1/32") clearance 33, the negative polarity of the electric current being delivered to the sliding contacts 29 via the high current wires 34 and related locks.
PLASMA-ARC-FLOW ASSEMBLY, as per Figure 2A here collectively denoted 35, consisting of the assembly as per Figure 1B, with venturi 6 encompassing the tip of the electrodes 1,2, a recirculating 1 HP pump 36 which forces the liquid waste 18 through said venturi 6, with an inlet 37 originating inside the main vessel assembly 10, the assembly being served by standard, pressure resistant, steel pipes 38 of 2.54 cm (1") in inside diameter with permanent, pressure resistant fastening to said vessel 10 via welding 13 or other means, said PlasmaArcFlow assembly further comprising a commercially available trap 39 with interior filter and bypasses (not shown here for simplicity) for the removal of solid precipitates without halting operations.
ELECTRIC POWER ASSEMBLY, as per Figure 2A here collectively denotes 40, consisting of a 50 DC electric generator 41, such as the commercially available Dimension 1000 made in the U. S. A. by Miller Corporation, with high current copper cable 42 to deliver the negative polarity to the contact assembly of Figure 2B while passing through the main vessel assembly 10 by means of pressure resistant fitting 43, the high current copper cable 44 for the delivery of the positive polarity to the cathode holder 20 protruding below and outside the base 12 of the main vessel assembly 10.
AUTOMATIC ARC FEEDING ASSEMBLY, as per Fig. 2A, here collectively denoted 45, more particularly described in Figs. 2C, 2D, with reference to which said assembly comprising commercially available electronic equipment 46 for the initiation, control and optimization of the arc, such as model NP6000 produced and sold in the U. S. A. by ArcAir, a division of Tweeco Corporation, with electronic sensors every 50 milliseconds of the voltage of the electric arc via wire 47 connected to the cathode 2 and wire 48 connected to the contacts 29 of Fig. 2B or to the ground, depending on the available model, said electronic equipment then sending an impulse electric current through wires 49 to the 1/2 HP electric motor 50 which operates a pair of sharply teethed gears 51 in tempered steel of 0.32 cm (1/8") in thickness, 7.6 cm (3") in outside diameter and spaced 0.96 cm (3/8") for a 1.9 cm (3/4") carbon rod; toothed gears 51 penetrate within the carbon rod 1 for about 0.32 cm (1/8") for proper grip thanks to the idle counter-roller 52 of about 7.6 cm (3") in outside diameter, 1.9 cm (3/4") in thickness and a circular depression in its cylindrical exterior to house and maintain the location of the carbon rod anode 1, said idle roller 52 being made of insulating hard material such as ceramic and being housed in a u-shaped holder 53 ending with a threaded shaft 54 which penetrates through the housing with a 0.08 cm (1/32") clearance 55, said idle roller 52 being forced against the carbon rod anode 1 and against the teethed gears 51 by spring 56, while said pressure can be removed for servicing via knob 57 acting on the threaded shaft 54, the teethed gear 51 being supported by ball bearings 58 located in the external housing for smooth operation, and, similarly, the idle roller 52 being supported by ball bearing 59 located in the U-shaped support 53, also for smooth operation, the entire assembly being supported by metal legs 60 for fastening into the metal top 15 of the main vessel assembly 10.
AUTOMATIC ROD RELOADING ASSEMBLY, as per Fig. 2A here collectively indicated 61, as more particularly described in Fig. 2E with respect to which the assembly comprises automatic means for interlocking the 1.9 cm (3/4") by 30.5 cm (12") carbon rods 1 via their tapered and threaded, female end 62 and male end 63, including infrared sensors 65,66 for the end 64 of the uppermost carbon rod 1 with sender unit 65 and receiving unit 66, plus an automatic arm 67 power assisted by an electric motor 68 and related commercially available electronic controls (not included in Fig. 2E for simplicity), which automatic arm 67 grabs a new carbon rod I from the magazine 69 storing 300 identical carbon rods sufficient for four hours of operation, and then said automatic arm 67 inserts the threaded male 63 of the new carbon rod I in the threaded female top 62 of the last carbon rod, the assembly being completed by an all encompassing case 70 fabricated from 0.63 cm (1/4") stainless steel metal which is fastened to the metal top 15 of the main vessel assembly 10 via legs 71 and bolts 72 or welding 13, said all encompassing metal case 70 having a 0.63 cm (1/4") stainless steel top 72 equipped with rapidly removing fasteners 73 for the fast reloading of the internal magazine 69 with new carbon rods, as well as for servicing, Fig. 2E also including in dashed lines the automatic feeder assembly 45 to illustrate the top position of the automatic reloading assembly.
MAGNEGAS UTILIZATION ASSEMBLY, as per Fig. 2A collectively indicated 74, for the utilization of the magnegas produced by the reactor, comprising the hole 75 of approximately 10.2 cm (4") in diameter in the top 15 of the metal vessel assembly 10 through which the magnegas produced by the reactor can freely exit, a stabilizing chamber 76 consisting of a tank of about 0.63 cm (1/4") in thickness, 61 cm (2') in diameter and 122 cm (4') in length generally positioned vertically in the top of the main vessel assembly 10 for the liquid waste expelled with the magnegas to settle down and return inside the vessel, a valve 77 for the control of the pressure inside the reactor vessel at a pre-set value, a filter 78 for the removal of carbon, residual liquid waste, and other particulates from the magnegas, stainless steel tubing 79 interconnecting the stabilizing chamber 76, the valve 77 and the filter 78 with welding 13 or other pressure resistant means, and the magnegas outlet 80 into a conventional utilization equipment (not shown in Fig. 2A for simplicity), such as a commercially available gas pump to transfer the magnegas into commercially available tanks.
HEAT UTILIZATION ASSEMBLY, as per Figure 2A collectively denoted 81, for the utilization of the heat produced by the reactor and acquired by the liquid waste 18, consisting of a recirculating 60.3 kW (1 HP) pump 82 with inlet 83 originating inside the main vessel assembly 10, which recirculating pumps 82 forces the liquid waste 18 into an outside heat utilization equipment 84, such as a radiator with fan or a heat exchanger, after which said recirculating pump 82 forces the liquid waste 18 back into the metal vessel via outlet 85, said heat utilization assembly 81 being served by a standard, high pressure, stainless steel tube 86 of 2.54 cm (1") internal diameter which is fastened to the main vessel assembly 10 by welding 13 or other pressure resistant means.
PLUS MISCELLANEOUS SAFETY AND COMPLEMENTARY EQUIPMENT NOT INDICATED IN FIGURE 2 FOR BREVITY, such as: a gauge with automatic shut-off in the event of leak of magnegas outside the main vessel assembly 10; a gauge also with automatic shutoff in the event of oxygen produced in magnegas of 5% or more due to inadvertent electrolysis; sensor with an automatic shut-off, usually included in the automatic feeder assembly, in the event of termination of breakdown of carbon rods; pressure gauge with automatic shut-off in the event of the pressure inside the main vessel reached 172 kPa (25 psi); liquid waste level gauge with automatic shut-off in the event the liquid waste level is 7.62 cm (3") below the top line; independent filters in both the PlasmaArcFlow assembly 35 and the heat utilization assembly 81 to remove impurities from the liquid waste 18; an all containing cart; pump operated means for connecting the main vessel assembly 10 to an outside tank of the desired capacity; an overall encompassing insulating cover to avoid accidental human contacts with the reactor; and other equipment.

The operation of the above preferred embodiment of the hadronic reactor at atmospheric pressure are the following: the reactor vessel is filled up completely with the liquid waste 18 to be recycled, such as automotive antifreeze waste or oil waste; a set of three manually interlocked 30.5 cm (12") long carbon rods 1 are inserted from the top by pushing it through the driving mechanism of the automatic feeder assembly 45, through the seals 27 of the top bushing 24 as in Fig. 2A, as well as through the copper contacts 29 of Fig. 2B, in such a way that said interlocked carbon rods are positioned with the end tip 97 at about 2.54 cm (1") distance from the top of tip 98 of the stationary cathode 2; the reactor is primed with magnegas for the complete removal of atmospheric oxygen in the magnegas collection system; the PlasmaArcFlow and heat utilization pumps are activated; the automatic feeder of the electric arc as per Figs. 2C and 2D is initiated on at a distance or via computer sequence which initiation first sends an electric current to the motor 30 of Fig. 2D which pushes downward the carbon rod 1 until contact with the cathode 2 is established and the electric arc is initiated, and thereafter the automatic feeder 45 senses the voltage of the electric arc every 50 milliseconds and correspondingly sends an electric impulse to motor 50 for the micrometric motion of the carbon rod 1 downward in the event the voltage has increased, or upward in the event the voltage has decreased, thus maintaining in this way the optimal pre-set voltage of the electric arc, which is about 40 V DC for a power source of 50 kWh; magnegas is then produced immediately following the initiation of the electric arc by exiting through the outlet 80 for pumping in conventional tanks; heat in the liquid waste 18 is also initiated immediately following the initiation of the electric arc, although it reaches the operating temperature of 82°C (180 degrees F) indicated earlier after about 3 minutes, following which the heat utilization assembly 81 becomes operative.

Following the above sequence, the operator remains on a stand-by, and intervenes only in the event of an automatic shut-off. In this case the related emergency light identifies the problem causing the shut-down, which can then be serviced.

Needless to say, the above reactor can be built according to a large number of variations, including smaller size models powered by less than 50 Kwh, or bigger size models powered by DC power sources bigger than 50 Kwh, with consequential downgrading or upgrading of the entire structure, including the use of electrodes with a diameter correspondingly smaller or bigger than 1.9 cm (3/4") in diameter.

Similarly, tests have established that several electric arcs can be put in series as per Fig. 1 D within the same main vessel assembly 10 and powered by the same DC electric power unit either in series or in parallel electric connections; the same reactor can be constructed with several electric arcs put in parallel and powered either by the same power unit or by individual power units. The same reactor described above can be used for the over-unity separation of the water as described earlier; the same reactor described above equally works up to internal pressures of the maximal value of 138 kPa (20 psi), after which the automatic feeding mechanism of the carbon rods 1 is no longer operational due to the force from the interior of the vessel tending to push the carbon rod 1 out.

The same reactor herein described can be used to a new method of utilization of crude fossil oil, consisting in its complete recycling into a clean burning combustible gas, plus solid precipitates useful for various industries, which methods has manifest advantages over the current process of crude oil via refineries, because of the dramatically better exhaust of the fuel produced, less operating costs, and logistic advantages due to the smallness and related mobility of the reactor as compared to the very large size of conventional refineries.

It should be indicated that the above embodiment equally works with an AC electric arc, although the latter requires different electrodes, and produces a smaller efficiency. The main difference with the embodiment of Figs. 2A-2E is the fact that both electrodes are generally consumed for an AC electric arc within liquids, thus requiring two different power assisted automatic feeders of the electrodes, interconnected in such a way to maintain not only the same voltage, but also the same location of the electric arc in the venturi 6, both features being realizable with commercially available equipment, such as the automatic feeder Model NP600 produced by Arc Air, a division of Tweeco, the large manufacturer of carbon rods.

As indicated earlier, when operating at atmospheric pressure, the above reactor with 50 kWh electric generator has a commercial over-unity of about 5, that is, for each unit of electric energy measured from the panel, the reactor produces about two units of energy in magnegas, and about three units of energy in heat. In particular, when operating at full capabilities, the reactor produces magnegas at the impressive rate of about 34 m³/h (1,200 cf/h). Two hours of operation of the reactors are then sufficient to produce sufficient magnegas to power a compact car for all daily commuting needs. When operating at 1200 A and 103-138 kPa (15-20 psi), the over-unity is of the order of 7. When filled up with tap water, the same reactor operating at 1000 A and atmospheric pressure has the overunity of 4 in the separation of the water molecules, with larger over-unities for larger currents and pressures.

The biggest operating expenditure of the above hadronic reactor is given by the 1.9 cm (3/4") carbon rods, which are generally consumed at the rate of 5.1 cm (1/2") in length per 0.028 m³ (cubic foot) of magnegas produced. By assuming the cost of $ 0.50 per carbon rod of 1.9 cm (3/4") diameter and 30.5 (12") length when produced in large quantities, the above consumption yields the carbon rod cost of $ 0.02 per 0.028 m³ (cubic foot) of magnegas. All other operating expenditures are of the orders of mills of dollars. In fact, the equipment can be used for at least 15 years during which it produces several millions of cubic feet of magnegas, yielding an ignorable amortization of the purchase price per cubic foot of magnegas produced. Other expenditures, including service, personnel, insurance, overheads, etc. have been identified in details and shown not to surpass the total cost of $ 0.005, resulting in the total operating costs of $ 0.9 m³ (0.025/cf). The actual cost of magnegas is then given by subtracting to the above cost the income for the recycling of the contaminated waste plus the income in the utilization of the heat.

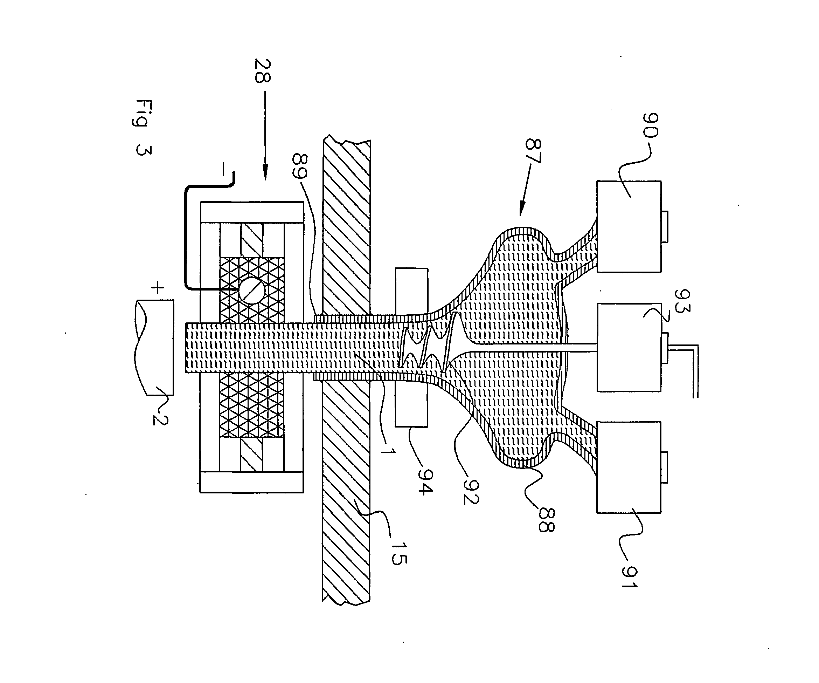

Fig. 3 depicts a preferred embodiment for a new method of coal gasification, whose main advantages over the embodiment of Figs. 2A-2E are: 1) Dramatic reduction of the operating cost; 2) Improvement of the continuous use of hadronic reactors; and 3) Increase of the energy content of the combustible gas produced.

The embodiment of Fig. 3 essentially consists in a process for the extrusion of the anode from powdery coal plus a bonding agent such as tar. In this way, coal is decomposed by the electric arc into its atomic constituents. The hadronic reactor then separates these elements into volatile components which are used to form a yet new type of magnegas, hereinafter referred to as coal-magnegas, plus solids which precipitate at the bottom of the reactor where they are collected periodically for industrial and other uses.

The above method implies a dramatic reduction of operating costs over the those of the reactor of Figs. 2A-2E, since coal is so inexpensive, to yield a practically ignorable cost of the anode per 0.028 m³ (cubic foot) of gas produced. The system is evidently conceived for continuous use, thus implying an improvement of the operations. Finally, the combustible gas produced from this process is evidently more energetic than the corresponding gas produced from carbon rods, due to the well known high energy content of coal.

Alternatively, the embodiment of Fig. 3 provides a new method of coal gasification, with clear advantages over other methods, such as a dramatically more acceptable fuel at a lower cost due to the commercial over-unity of the hadronic reactor.

More specifically, in the preferred embodiment of Fig. 3 depicts the anode extrusion assembly collectively indicated 87 which the anode coal rod 1 has the approximate dimension of 1.9 cm (3/4") and it is continuously extruded from an all encompassing metal container 88 made up of stainless steel 0.32 cm (1/8") in wall thickness, whose bottom part has the approximate shape of a funnel terminating in a cylindrical part 89 having the interior diameter equal to the exterior diameter 1.9 cm (3/4") of thecoal rod 1, which cylindrical part is fastened to the top 15 of the main vessel assembly 10 by welding 13 or other pressure resistant means, said container 88 being internally coated with teflon or other high temperature slippery material to facilitate the extrusion; a separate tank 90 supplies the powdery coal to or other conducting powder to the container 88 via a commercially available metered dispenser (not shown for simplicity), while the separate tank 91 supplies the bonding agent, such as tar or epoxy, also according to a commercially available metered dispenser (not shown in the figure for simplicity). The interior of the container 88 contains a helical gear 92 with maximal clearance with the wall of the container 88 of about 0.06 cm (1/16") and a large pitch of about 1.27 cm (1/2"), said helical gear 92 being powered by electric motor 93 of about 0.73 kW (1 HP); said gear 92 mixes the coal and the bonding agent and pushes them downward. Bonding means 94, such as an electric heater, then bonds the coal and the tar into a solid rod usable as anode I ; following its extrusion, the coal rod enters into the contact assembly 28 of Fig. 28 for the delivery of the DC electric current with negative polarity. At the exit of said contact assembly 28, the coal rod 1 is finally exposed to the stationary, nonconsumable cathode 2 made up of a tungsten rod of about 5.1 cm (2") in diameter and 7.62 cm (3") in length. the electric arc is then initiated and continues as per the embodiment of Figs. 2C and 2D.

The operation of this new method of coal gasification is the following. First, tank 90 is filled up with coal and tank 91 is filled up with the selected bonding agent. The entire extrusion equipment is then primed with magnegas to eliminated any atmospheric oxygen for safety. The container 88 is filled up with powdery coal and the selected bonding agent in the appropriate proportion. The electric motor 93 is started and the bonding fixture 94 is activated, resulting in the extrusion of the coal rod 1 which penetrates inside the top 15 of the main vessel assembly 10. Sensors indicate the penetration into and exiting of said coal rod out of the electric contacts assembly 28, by therefore activate the automatic feeder as, per the embodiment of Figs. 28 and 2C.

Rather than moving the carbon rods 1 toward the cathode 2 as per the embodiment of Fig. 2A, the same automatic feeder assembly 45 is used this time to control electric motor 93 for the scope of controlling the speed of extrusion of the coal rod 1. The initiation of the arc occurs under an electric short and consequential consumption of the coal rod 1 to the gap 3 of the electric arc. Subsequently, in the event of increase of the arc voltage, indicating an increase of the arc gap 3, said speed is increased by said automatic feeder assembly 45, while in the event of decrease of the arc voltage, indicating a decrease of the arc gap 3, the extrusion is halted, thus achieving constant voltage.

This invention also includes the following alternative approach to the gasification of coal into magnegas via the PlasmaArcFlow Reactors. First, coal can be independently extruded into coal rods of the outside diameter 1.9 cm (3/4) and 30.5 cm (12) length with tapered threaded ends as in Fig. 2E. In this case, said coal rods can be used in the automatic reloading assembly 61 of Fig. 2E in lieu of carbon rods, resulting in exactly the same coal gasification as that of the automatic extrusion assembly 87 of Fig. 3.

Alternatively, powered coal can be magnetically bonded to the liquid inside the reactor up to the point of magnetic saturation. In this case, due to the excess carbon contained in the magneliquid, the use of nonconsumable, non-carbon base electrodes is possible, resulting in a long life of the reactor. In this latter case, the automatic feeder of Figs. 2B and 2C merely initiates and maintains the electric arc without feeding the anode due to consumption.

One of the main features of the hadronic reactors as per Figs. 2A-2E and 3 is that of permitting continuous, 24 hours use without interruptions except for service. This is permitted by the inter-locking character of the carbon or coal rods, which, as such, can be continuously fed into the electric arc. In particular, due to the linear character of the interlocking rods, the anode must necessarily penetrate into the main vessel assembly 10 through seals 27 as in Fig. 2A.

A limitation of the above embodiments is that they can only operate at limited pressure of the maximal order of 138-206 kPa (20-30 psi). This is due to the fact that, at higher pressures, the automatic feeder cannot any longer force the carbon or coal rod into the reactor due to the excessive value of the force trying to push the same rod out of the vessel due to the internal pressure.

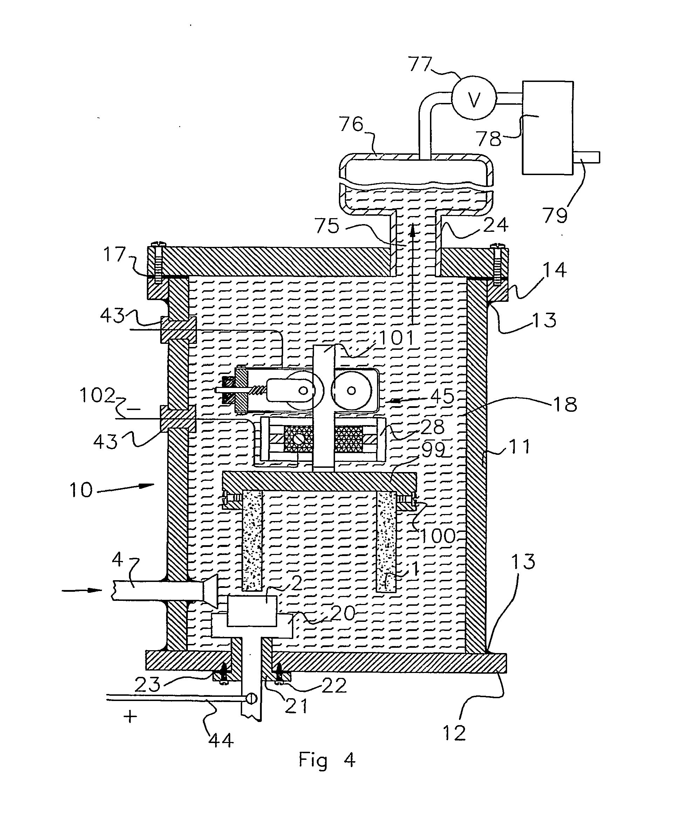

Fig. 4 depicts a reactor not belonging to the claimed invention, which can operate at high value of internal pressure, of the order of 1379 to 2068 kPa (200 to 300 psi), resulting in a dramatic increase of the efficiency with commercial overunities of the order of 30 or more when the reactor is powered by 50 Kwh. This new hadronic reactor is composed by the following main parts:
MAIN CLOSED VESSEL ASSEMBLY, collectively denoted 10, essentially similar to that of Fig. 2A, and comprising a vertical steel cylindrical sidewall 11 of about 1 "thickness, about 90.4 cm (3') external diameter and about 18 cm (7') height, with base 12 consisting of a steel disk of 5.1 cm (2") thickness and 94 cm (3'and 1") in outside diameter fastened to sidewall 11 via high pressure resistant continuous welding 13, the vessel being additionally completed by the steel flange 14 of 5.1 cm (2") thickness and 99 cm (3'3") in outside diameter fastened to said sidewall 11 via high pressure resistant continuous welding 13, plus a top 15 composed by a steel disk of 5.1 cm (2") in thickness and 99 cm (3'and 3") in outside diameter, which is fastened into the flange 14 via bolts 16 or other means, gasket 17 assuring the complete sealing of the interior chamber in such a way to sustain high pressure, said closed metal vessel being completely filled up with the contaminated liquid waste 18 to be recycled.
ELECTRODES ASSEMBLY, collectively denoted 19, comprising the stationary nonconsumable cathode 2 composed by a tungsten rod of at least 5.1 cm (2") in outside diameter and 7.62 cm (3") in length, housed into a copper holder 20 which protrudes below and outside the base 12 of the vessel and it is insulated electrically from the same base 12 by the nonconducting bushing 21, fastened to the base 12 by screws 22, gasket 23 ensuring the complete sealing under pressure of the main vessel, said busing 21 being made of phenolic or other electric insulator in the shape and dimension so as not to allow any distance less than 2.54 cm (1") between the cathode holder 20 and said metal base 12; plus a consumable anode 1 made of carbon, coal or other conducting material, in the shape of a cylinder having the thickness of 1.9 cm (3/4"), the radius of one foot, and the height of 91 cm (3'), said cylindrical anode 1 being housed inside a copper cup 99 holding the cylindrical anode with fasteners 100, said assembly of the cylindrical anode 1 and its copper holder 99 terminating in the upper part into a copper rod 101 of 1.9 cm (3/4") in diameter and height longer than the consumable length of the cylindrical anode 1, e. g., 122 cm (4') height, said copper rod 101 passing through a contact assembly 28 for the delivery of the electric current with negative polarity similar to that of Fig. 2B, the negative polarity being delivered by high current electric wires 102 while the electric current with the positive polarity is delivered to the copper holder 20 of the cathode 2 in its part protruding outside and below the base 12, as per the embodiment of Fig. 2A.
PLASMA-ARC-FLOW ASSEMBLY, collectively denoted 35, comprising the configuration of Fig. 1A served by a recirculating pump similar to that of Fig. 2A, although not included in Fig. 4 for simplicity; ELECTRIC POWER ASSEMBLY, collectively denoted 40 also similar to that of Fig. 2A, comprising a 50 DC electric generator, such as the commercially sold model Dimension 1000 made in the U. S. A. by Miller Corporation, with high current copper cable 102 to deliver the negative polarity to the interior contact assembly of Fig. 2B and copper cable 44 for the delivery of the positive polarity to the cathode holder 20 protruding below and outside the base 12 of the vessel, and automatic feeder 45 for the initiation, maintaining and optimization of the electric arc similar to that of Fig. 2C and 2D although, this time, with the driving head completely submerged inside the vessel assembly 10 and the electronic part outside it, said automatic feeder being additionally modified to have the capability of rotating the copper rod 101 of the cylindrical anode 1 at the speed of 5 r.p.m. in addition to its motions along the rod axis, so as to permit the rotation of the cylindrical anode 1 over the cathode 2. in addition to the motion of the cylindrical anode 1 toward and away from the stationary cathode 2.
MAGNEGAS UTILIZATION ASSEMBLY 74, as per Fig. 2A, here omitted for simplicity.
HEAT UTILIZATION ASSEMBLY 81, as per Fig. 2A, here omitted for simplicity.
PLUS MISCELLANEOUS SAFETY AND COMPLEMENTARY EQUIPMENT NOT INDICATED IN FIGURE 4 FOR BREVITY, essentially the same as per the embodiment of Figs. 2A-2E, here also omitted for simplicity.

The operation of the preferred embodiment of the high pressure hadronic reactor as per Fig. 4 is the following: the cylindrical carbon or coal anode 1 is inserted into its copper holder 99 and placed in the position suitable to initiate the arc; the closed reactor vessel is filled up completely with the liquid waste 18 to be recycled, such as automotive antifreeze waste or engine oil waste or crude oil; the reactor is then primed with magnegas for the complete removal of atmospheric oxygen in the interior of the vessel; the PlasmaArcFlow and heat utilization pumps are activated; the automatic feeder of the electric arc is initiated at a distance from the equipment or via computer sequence; the cylindrical carbon or coal anode 1 initiates rotation edgewise with respect to the tungsten cathode 2, while advancing also head-on until the electric arc is initiated; as the carbon or coal is consumed by the electric arc at one point of the edge of the cylinder anode 1, the rotation of the latter, plus its micrometric downward motion when needed, permit keeping constant the electric voltage of the arc, thus maintaining constant its gap; magnegas is immediately produced following the initiation of the electric arc, jointly with the production of heat in the liquid; operation initiates at atmospheric internal pressure, and rapidly increases with the production of magnegas to the preset pressure of the gaugevalve assembly 77; all magnegas produced in excess of said pre-determined pressure is then permitted to exit the reactor and be pumped into conventional storage tanks.

While the low pressure hadronic reactor in the embodiment of Figs. 2A-2E can operate continuously 24 hours a day with the sole interruption due to service, the high pressure hadronic reactor in the embodiment of Fig. 4 needs the periodic replacement of the cylindrical carbon or coal anode 1 every S hours of work for the cylinder dimension given above.

Such replacement can be realized via means for fast removal of the top 15 of the vessel 10 and fast reloading of the new cylinder anode.

To understand the duration of said cylindrical anode, recall that a 1.9 cm (3/4") carbon or coal rod consumes at the rate of about 1.27 cm (1/2") per 0.028 m³ (cubic foot). A cylindrical anode with 1.9 cm (3/4") thickness, 30.5 cm (1') radius and 91 cm (3') height is the equivalent of 300 linear rods of 1.9 cm (3/4") in diameter and 30.5 cm (12') length, thus being useful for the production of 204 m³ (7,200) cubic feet of magnegas which, at the rate of 25 m³/h (900 cf/h) last for 8 continuous working hours, as indicated. Longer durations of the cylindrical anode can be easily accommodated by increasing its radius, or its height or both. Sufficiently larger vessel can, therefore, be designed to work continuously for 24 hours, then halt operation for the rapid replacement of the cylindrical anode, and then resume operations immediately thereafter.

The high pressure hadronic reactor as per Fig. 4 is expected to have an efficiency dramatically larger than that of low pressure reactors, because the production of magnegas in the electrodes gap displaces the liquid waste to be recycled, as a consequence of which the electric arc occurs for the majority of the time, estimated to be 60%, within the magnegas produced, rather than within the liquid, and consequential relatively low efficiency.

By comparison, when operated at pressures of the order of 1379 or 2068 kPa (200 or 300 psi), the bubbles of magnegas produced by the electric arc 95 are dramatically reduced in size by at least 99%. It then follows that the electric arc occurs for the majority of the time within the liquid to be recycled, thus dramatically increasing the production of magnegas, with corresponding dramatic increase of the heat produced.

Detailed calculations based on hadronic mechanics, hadronic superconductivity, and hadronic chemistry, estimate that the over-unity of the high pressure hadronic reactor as per the embodiment of Fig. 4, when operating at 2068 kPa (300 psi), is expected to be at least 30, of which an over-unity of 10 is expected for the production of magnegas, and an over-unity of 20 is expected in the production of usable heat.

By remembering that electric generators have an efficiency of 30%, the efficiency of the high pressure hadronic reactor of Fig. 4 is expected to be self-sustaining, in the sense that the magnegas produced is sufficient to power an electric generator for the production of the DC electric current needed to operate the hadronic reactor itself, and then remaining with sufficient magnegas to be used for other purposes, in addition to the production of a large amount of usable heat.

An alternative embodiment is that of Fig. 4 in which the negative polarity of the electric current is delivered via copper busing essentially similar to those of Fig. 2B sliding on the exterior cylindrical surface of the anode 1 at about 2.54 cm (1") distance from its lower edge and positioned as close as possible to the electric arc to minimize losses of electric energy due to the high resistance of carbon. In this alternative embodiment the a contact assembly is the same as that of Fig. 2B, except for the fact that the anode 1 has now the outside diameter of 61 cm (2'), while the anode driving assembly is the same as that of Fig. 2C, 2D, the only difference being that the assembly now drives the copper rod or shaft 101 of the anode 1 and contains an additional means for the rotation of the same while advancing. The main advantage of this alternative embodiment is a substantial savings of electric energy. In fact, for the embodiment of Fig. 4 the electric current has to pass through the entire length of the cylindrical anode, with considerable losses due to known resistance of carbon which is about 300 times the resistance of copper. By comparison, the latter embodiment implies the delivery of the current very close to the arc, thus avoiding the preceding waste of electric energy.

A preferred embodiment of linear hadronic reactor for the recycling of liquid sewage is depicted in Fig. 5, and comprises the following seven stations:
STATION 1 : FILTER-MACERATOR ASSEMBLY, collectively denoted 103, comprising a stainless steel inlet tube 104 of the approximate interior diameter of 2.54 cm (1") in which the liquid sewage is immitted, followed by a filter-macerator pump assembly 105 intended to remove large particulates from penetrating the equipment, as well as emulsify biological granules into a form which can be processed by the equipment.
STATION 2: FLOW VALVE CONTROL AND METER ASSEMBLY, collectively denoted 106, comprising valves for the control of the flow to a pre-set value as well as flow meters for their measurement, so as to set the equipment to operate at the desired rate of recycling.
STATION 3: PLASMA-ARC-FLOW REACTORS, collectively denoted 108, comprising a stainless steel tube 109 in the approximate interior diameter of 2.54 cm (1") which ends in the venturi 6 of Fig. 1B containing a stationary tungsten cathode 2 and a consumable coal or carbon anode 1, the venturi 6 having a pressure resistant protuberance 110 vertically upward through which the anode 1 penetrates via seals 111 so as to form a completely sealed equipment against water leaks, said electrodes being powered by a 50 kWh DC electric generator 112 delivering the positive electric polarity to the cathode via high current copper cables 113 and the negative electric polarity to the anode via the high current copper cable 114 into the submerged contact assembly of Fig. 2B positioned as close as possible to the venturi 6 to minimize losses of electric power, the arc 95 being initiated, maintained, and optimized by an automatic control unit similar to that of the reactors of Figs. 2A-2E and 4, which is positioned in the outside and on the top of the reactor as per Fig. 2C and 2E.
STATION 4: MAGNEGAS UTILIZATION UNIT, collectively denoted 115, consisting of the stainless steel tube 116 of about 2.54 cm (1") internal diameter, which continues the linear flow of the liquid this time into a stabilizing chamber 117 consisting of a cylindrical, vertically placed, stainless steel tank of about 0.63 cm (1/4") in thickness, 61 cm (2') in diameter and 183 cm (6') in height placed mid-way with respect to inlet tube 116, having the purpose of separating the magnegas produced by the processed liquid, the magnegas being expelled at the top pipe 118, also formed of a stainless steel tube of approximately 1"internal diameter, followed by a pressure regulator 119, and a filter 120, after which the stainless steel pipe is connected to a standard pump for compression of the magnegas into a standard gas tank.
STATION 5: DEGAUSSING. collectively denoted 121, consisting of an industrial microwave oven absorbing about 3 kWh with an interior dimension of approximately 183 cm x 183 cm x 183 cm (6'x 6'x 6'), and an internal serpentine of non-metallic tubing such as glass of approximately 2.54 cm (1") internal diameter, operating at the resonating frequency of the water as in consumers microwave ovens.
STATION 6: CENTRIFUGE, collectively denoted 122, consisting of a conventional, commercially available centrifuge 122 suitable to serve the flow of 3.8 m³/h (1,000'g/h), for the removal of solid precipitates from the processed liquid, equipped with means 123 for the periodic removal of said solid precipitates without interruption of the operations, said centrifuge being equipped with a bypass not shown in the figure in the event its operation is not desired.
STATION 7: FINAL FILTER, collectively denoted 124, comprising a commercially available filter whose porosity is that requested by the environmental protection authority for the specific application at hand, said filter being equipped with a bypass not shown in the Fig. 5 for brevity.
PLUS ADDITIONAL SAFETY AND CONTROL GAUGES, including outside magnegas detectors with automatic shut off in the event of leaks; sewage pressure gauge with automatic shut-off in the event of a pressure build-up; panel for the remote initiation and control of the operations, including all needed shut-off switches, etc.

The operation of the above preferred embodiment for the linear hadronic recycler is the following. The coal or carbon rod 1 is inserted; the control of Station 2 is pre-set at the desired flow, say, 3.8 m³/h (1,000 g/h); the inlet line 104 is connected to town water; the macerator pump 105 is initiated; and the electric arc is activated, which operations initiate the production of magnegas and irrigation water. Once the functioning of the equipment with city water is verified, the liquid sewage is immitted with a bypass which disconnects the use of city water. The sewage is then recycled by the arc, which kills all bacteriological activities, partially decomposing the biological contaminants into gaseous and solid precipitates, and baking the rest into a form usable as fertilizers. The liquid sewage so processed is then forced by the macerator pump 105 into the magnegas stabilizing tank 117 in which the liquid grows up to a point over the mid-line preset by the pressure valve 119. In this way, magnegas is produced, filtered and passed to a conventional pump for storage in conventional tanks. The processed liquid sewage continues its linear flow this time into the degaussing station which has the purpose of removing the magnetic polarization acquired by the water molecules when passing through the very intense magnetic fields of the electric arc estimated to be of the order of 10 Tesla or more, said degaussing station removing said magnetic polarization by merely forcing the water molecules to enter into violent vibration because invested by a microwave with the resonating frequency of the water. Upon being degaussed, the processed liquid sewage passes through the centrifuge for the elimination of unwanted solid particulates. The liquid sewage so processed then passes through the filter 124 to reach the purity of the final irrigation water as requested by environmental authorities, by exiting through outlet 107.

A virtually endless number of variations, additions, or modifications of the embodiment of Fig. 5 are possible, such as the extension of the indicated linear hadronic recycler with two or more Stations 3 and related Station 4 all connected in series, and each equipped with a bypass, for improving the recycling of the same flow to the desired quality, or the use of several complete linear hadronic recyclers placed in parallel for the increase of the flow of the processed sewage.

AAll matters contained in the foregoing construction or shown in the accompanying drawings, shall be interpreted as illustrative and not in the limiting sense.

The scope of invention is as defined in the appended claims.

## Claims

1. Apparatus for recycling a liquid into a combustible gas, heat and solids, comprising:
- a closed metal vessel (10) for holding the liquid to be recycled;
- at least one pair of electrodes (1, 2) disposed inside the closed metal vessel (10);
- pumping means (36, 105) for forcing the liquid to flow through submerged electric arcs (95) between the at least one pair of electrodes and the plasma (96) surrounding the tips (97, 98) of the electrodes (1, 2),
- an assembly (74) for collecting combustible gas bubbling to a surface of the liquid;
**characterized in that** the apparatus further comprises
- a tube (6) of electrically insulating material which encompasses the tips (97, 98) of the electrodes (1, 2) and ends with a smooth curve (9) to minimize turbulences, and
- an inlet pipe (4) which ends in the tube (6),
whereby the pumping means (36, 105) force the liquid through the pipe (4) and the tube (6), thus forcing the liquid to flow through the submerged electric arcs (95).

2. The apparatus according to Claim 1, wherein the electric arcs are contained within a tube having an ellipsoidal sectional area corresponding to an approximate shape of a plasma formed by the electric arcs, thereby ensuring the flow of the liquid through the plasma adjacent electrode tips generating the electric arcs and subsequently through a gap between the electrode tips.

3. The apparatus according to Claim 1, wherein the liquid is forced to flow through an interior of one (2) of said electrodes, thereby ensuring the flow of the liquid through the electric arcs and subsequently through a plasma formed by the electric arcs.

4. The apparatus according to Claim 1, wherein the electrodes include a carbon rod anode (1), the apparatus further comprising
a motor-driven toothed gear (51) for driving the anode (1) toward the electric arc, the toothed gear (51) acting with pressure against the anode (1), and
a counter-balancing insulating idle roller (52) forced against the carbon rod anode (1).

5. The apparatus according to Claim 1, further comprising means (61) for automatically reloading interlocking electrode rods, the means including a storage magazine, a sensor signaling the activation of the reloading, and means for picking up an electrode rod to be reloaded from the magazine and interlocking said electrode rod to be reloaded with a last active electrode rod loaded in said metal vessel.

6. The apparatus according to Claim 1, wherein at least one of said electrodes is cylindrically shaped.

7. The apparatus according to Claim 1, wherein at least one of said electrodes is made of coal.

8. The apparatus according to Claim 1, further comprising means for the continuous extrusion of at least one electrode from a conducting powder and a bonding agent.

9. The apparatus according to Claim 1, wherein said pairs of electrodes and electric arcs are in series.

10. The apparatus according to Claim 1, wherein said pairs of electrodes and electric arcs are in parallel.

11. The apparatus according to Claim 1, wherein said electric arcs between the electrodes are initiated and controlled by motor assisted automatic electronic means.

12. The apparatus according to Claim 1, wherein a polarity of an electric current is delivered via submerged contacts sliding under pressure on an anode juxtaposed the electric arcs.

13. The apparatus according to Claim 1, wherein the assembly (74) for collecting the combustible gas produced includes a gas stabilization tank positioned above a top level of said liquid.

14. The apparatus according to Claim 1, further comprising means for the rapid collection of solid precipitates without stopping operation of the apparatus.

15. The apparatus according to Claim 1, wherein the heat absorbed in the liquid is utilized by pumping said liquid through an external radiator (84).

16. The apparatus according to Claim 1, wherein the heat absorbed in the liquid is utilized by pumping said liquid through one of an external and internal heat exchanger.

17. The apparatus according to Claim 1, wherein the combustible gas is immetted into a stabilization tank positioned in a top of the metal vessel and having an opening for mutual communication between the stabilization tank and the metal vessel, so as to permit the settling down of the liquid trapped in the combustible gas and its return to the metal vessel.

18. The apparatus according to Claim 1 further comprising a valve with a pressure gauge located in an inlet to preset a flow of the liquid to a predetermined value.

19. The apparatus according to Claim 1, wherein an electric current provided to the electrodes is DC.

20. The apparatus according to Claim 1, wherein an electric current provided to the electrodes is AC.

21. The apparatus according to Claim 1, wherein one polarity of an electric current is delivered via metal contacts sliding with spring assisted pressure on the electrodes, said contacts being positioned near the electric arcs.

22. The apparatus according to Claim 1 further comprising a degaussing station (121) for the removal of magnetic polarizations acquired by molecules of said liquid waste when said liquid waste molecules pass through the electric arcs.

23. The apparatus according to Claim 1 further comprising a centrifuge (122) for the removal of solid components in the recycled liquid waste.

## Patentansprüche

1. Vorrichtung zum Recyceln einer Flüssigkeit in ein brennbares Gas, Hitze und Feststoffe, aufweisend:
- einen geschlossenen Metallbehälter (10) zum Halten der Flüssigkeit zum Recyceln;
- zumindest ein Paar von Elektroden (1, 2) angeordnet innerhalb des geschlossenen Metallbehälters (10);
- Pumpmittel (36, 105) zum Zwingen der Flüssigkeit durch untergetauchte Lichtbögen (95) zwischen dem zumindest einen Paar von Elektroden und dem Plasma (96), welches die Spitzen (97, 98) von den Elektroden (1, 2) umgibt, durchzufließen,
- eine Anordnung (74) zum Sammeln von brennbarem Gas, welches zu einer Oberfläche von der Flüssigkeit sprudelt; **dadurch gekennzeichnet, dass** die Vorrichtung weiter aufweist
- ein Rohr (6) aus elektrisch isolierendem Material, welches die Spitzen (97, 98) von den Elektroden (1, 2) umfasst, und welches mit einer sanften Kurve (9) endet zum Minimieren von Turbulenzen, und
- eine Einlassröhre (4), welche in dem Rohr (6) endet,
wobei die Pumpmittel (36, 105) die Flüssigkeit durch die Röhre (4) und das Rohr (6) zwingen, somit die Flüssigkeit zwingen, durch die untergetauchten Lichtbögen (95) zu fließen.

2. Die Vorrichtung gemäß Anspruch 1, wobei die Lichtbögen in einem Rohr beinhaltet sind, welches eine elliptische Querschnittsfläche hat, die einer ungefähren Form von einem Plasma entspricht, welches durch die Lichtbögen gebildet wird, dabei den Fluss von der Flüssigkeit sicherstellend, durch das Plasma angrenzend an die Elektrodenspitzen, die die Lichtbögen erzeugen, und im Anschluss durch einen Spalt zwischen den Elektrodenspitzen.

3. Die Vorrichtung gemäß Anspruch 1, wobei die Flüssigkeit gezwungen wird, durch ein Inneres von einer (2) von den Elektroden zu fließen, dabei den Fluss von der Flüssigkeit sicherstellend, durch die Lichtbögen und im Anschluss durch ein Plasma, welches durch die Lichtbögen gebildet wird.

4. Die Vorrichtung gemäß Anspruch 1, wobei die Elektroden eine Kohlenstoffstabanode (1) beinhalten, wobei die Vorrichtung weiter aufweist
einen motorbetriebenen Zahnantrieb (51) zum Antreiben der Anode (1) in Richtung des Lichtbogens, wobei der Zahnantrieb (51) mit Druck gegen die Anode (1) wirkt, und
eine ausbalancierende isolierende Mitläuferwalze (52), die gegen die Kohlenstoffstabanode (1), gezwungen wird.

5. Die Vorrichtung gemäß Anspruch 1, weiter aufweisend Mittel (61) zum automatischen Nachladen von Interlockelektrodenstäben, wobei die Mittel ein Speichermagazin beinhalten, einen Sensor, der die Aktivierung des Nachladens signalisiert, und Mittel zum Aufnehmen eines Elektrodenstabs, zum Nachladen von dem Magazin, und Interlocken von dem Elektrodenstab zum Nachladen mit einem letzten aktiven Elektrodenstab geladen in dem Metallbehälter.

6. Die Vorrichtung gemäß Anspruch 1, wobei zumindest eine von den Elektroden zylindrisch geformt ist.

7. Die Vorrichtung gemäß Anspruch 1, wobei zumindest eine von den Elektroden aus Kohle gemacht ist.

8. Die Vorrichtung gemäß Anspruch 1, weiter aufweisend Mittel zum kontinuierlichen Extrudieren zumindest einer Elektrode aus einem leitfähigen Pulver und einem Bindemittel.

9. Die Vorrichtung gemäß Anspruch 1, wobei die Paare von Elektroden und Lichtbögen in Serie sind.

10. Die Vorrichtung gemäß Anspruch 1, wobei die Paare von Elektroden und Lichtbögen parallel sind.

11. Die Vorrichtung gemäß Anspruch 1, wobei die Lichtbögen zwischen den Elektroden gezündet und gesteuert werden durch motorunterstützte automatische elektronische Mittel.

12. Die Vorrichtung gemäß Anspruch 1, wobei eine Polarität von einem elektrischen Strom bereitgestellt wird durch untergetauchte Kontakte, die unter Druck an einer Anode gleiten, die neben den Lichtbögen angeordnet ist.

13. Die Vorrichtung gemäß Anspruch 1, wobei die Anordnung (74) zum Sammeln des erzeugten brennbaren Gases einen Gasstabilisierungstank beinhaltet, der über einem oberen Niveau von der Flüssigkeit angeordnet ist.

14. Die Vorrichtung gemäß Anspruch 1, weiter aufweisend Mittel für die schnelle Sammlung von festen Ausfällungen ohne den Betrieb der Vorrichtung zu unterbrechen.

15. Die Vorrichtung gemäß Anspruch 1, wobei die Hitze, die durch die Flüssigkeit aufgenommen wird, verwendet wird durch Pumpen der Flüssigkeit durch einen externen Radiator (84).

16. Die Vorrichtung gemäß Anspruch 1, wobei die Hitze, die in der Flüssigkeit aufgenommen wird, verwendet wird durch Pumpen der Flüssigkeit durch einen von einem externen und einem internen Hitzetauscher.

17. Die Vorrichtung gemäß Anspruch 1, wobei das brennbare Gas in einen Stabilisierungstank gegeben wird, der in einem Oberteil von dem Metallbehälter angeordnet ist, und der eine Öffnung zur wechselseitigen Kommunikation zwischen dem Stabilisierungstank und dem Metallbehälter hat, um es zu erlauben, dass Flüssigkeit, die in dem brennbaren Gas gefangen ist, zur Ruhe kommt, und ihre Rückkehr in den Metallbehälter.

18. Die Vorrichtung gemäß Anspruch 1, weiter aufweisend ein Ventil mit einem Druckmessgerät, angeordnet in einem Einlass zum Voreinstellen eines Flusses von der Flüssigkeit auf einen vorbestimmten Wert.

19. Die Vorrichtung gemäß Anspruch 1, wobei ein elektrischer Strom, der den Elektroden bereitgestellt wird, DC ist.

20. Die Vorrichtung gemäß Anspruch 1, wobei ein elektrischer Strom, der den Elektroden bereitgestellt wird, AC ist.

21. Die Vorrichtung Gemäß Anspruch 1, wobei eine Polarität eines elektrischen Stroms bereitgestellt wird, durch Metallkontakte, die mit federunterstütztem Druck an den Elektroden gleiten, wobei die Kontakte in der Nähe der Lichtbögen positioniert sind.

22. Die Vorrichtung gemäß Anspruch 1, weiter aufweisend eine Entmagnetisierungsstation (121) zum Entfernen von magnetischen Polarisationen erworben von Molekülen von flüssigem Abfall, wenn die flüssigen Abfallmoleküle durch die Lichtbögen durchlaufen.

23. Die Vorrichtung gemäß Anspruch 1, weiter aufweisend eine Zentrifuge (122) für die Entfernung von festen Komponenten in dem recycelten flüssigen Abfall.

## Revendications

1. Dispositif de recyclage d'un liquide en un gaz combustible, de la chaleur et des matières solides, comprenant :
- une cuve métallique fermée (10) destinée à contenir le liquide à recycler ;
- au moins une paire d'électrodes (1, 2) placées à l'intérieur de la cuve métallique fermée (10) ;
- un moyen de pompage (36, 105) pour forcer le liquide à circuler à travers des arcs électriques immergés (95) entre lesdites électrodes et le plasma (96) qui entoure les bouts (97, 98) des électrodes (1, 2),
- un ensemble (74) pour collecter un gaz combustible qui monte à la surface du liquide ;
**caractérisé en ce que** le dispositif comprend en outre
- un tube (6) en matériau électriquement isolant qui englobe les bouts (97, 98) des électrodes (1, 2) et qui se termine par une courbe douce (9) pour minimiser les turbulences, et
- un tuyau d'entrée (4) qui se termine dans le tube (6),
dans lequel le moyen de pompage (36, 105) force le liquide à passer dans le tuyau (4) et dans le tube (6), forçant ainsi le liquide à passer à travers les arcs électriques immergés (95).

2. Dispositif selon la revendication 1, dans lequel les arcs électriques sont contenus à l'intérieur d'un tube de section ellipsoïdale correspondant à la forme approximative d'un plasma formé par les arcs électriques, assurant ainsi l'écoulement du liquide à travers le plasma au voisinage de bouts d'électrodes générant les arcs électriques puis à travers un espace entre les bouts d'électrodes.

3. Dispositif selon la revendication 1, dans lequel on force le liquide à circuler à l'intérieur de l'une (2) desdites électrodes, assurant de ce fait l'écoulement du liquide à travers les arcs électriques puis à travers un plasma formé par les arcs électriques.

4. Dispositif selon la revendication 1, dans lequel les électrodes comprennent une anode à tige de carbone (1), le dispositif comprenant en outre
une roue dentée motorisée (51) pour entraîner l'anode (1) vers l'arc électrique, la roue dentée (51) agissant avec pression contre l'anode (1), et
un galet libre d'équilibrage isolant (52) poussé contre l'anode à tige de carbone (1).

5. Dispositif selon la revendication 1, comprenant en outre un moyen (61) de recharge automatique de tiges d'électrodes à enclenchement, le moyen comprenant un magasin de stockage, un capteur signalant l'activation de la recharge, et un moyen pour saisir une tige d'électrode à recharger à partir du magasin et enclencher ladite tige d'électrode à recharger avec une dernière tige d'électrode active dans ladite cuve métallique.

6. Dispositif selon la revendication 1, dans lequel au moins l'une desdites électrodes est de forme cylindrique.

7. Dispositif selon la revendication 1, dans lequel au moins l'une desdites électrodes est en charbon.

8. Dispositif selon la revendication 1, comprenant en outre un moyen permettant l'extrusion continue d'au moins une électrode à partir d'une poudre conductrice et d'un liant.

9. Dispositif selon la revendication 1, dans lequel lesdites paires d'électrodes et les arcs électriques sont en série.

10. Dispositif selon la revendication 1, dans lequel lesdites paires d'électrodes et les arcs électriques sont en parallèle.

11. Dispositif selon la revendication 1, dans lequel lesdits arcs électriques entre les électrodes sont amorcés et commandés par un moyen électronique automatique motorisé.

12. Dispositif selon la revendication 1, dans lequel une polarité d'un courant électrique est délivrée via des contacts immergés glissant sous la pression sur une anode juxtaposée aux arcs électriques.

13. Dispositif selon la revendication 1, dans lequel l'ensemble (74) de collecte du gaz combustible produit comprend un réservoir de stabilisation de gaz positionné au-dessus d'un niveau supérieur dudit liquide.

14. Dispositif selon la revendication 1, comprenant en outre un moyen de collecte rapide des précipités ne nécessitant pas l'arrêt du fonctionnement du dispositif.

15. Dispositif selon la revendication 1, dans lequel la chaleur absorbée dans le liquide est utilisée en pompant ledit liquide à travers un radiateur extérieur (84).

16. Dispositif selon la revendication 1, dans lequel la chaleur absorbée dans le liquide est utilisée en pompant ledit liquide à travers un échangeur de chaleur externe ou un échangeur de chaleur interne.

17. Dispositif selon la revendication 1, dans lequel le gaz combustible est introduit dans un réservoir de stabilisation positionné dans une partie supérieure de la cuve métallique et comportant une ouverture permettant la communication mutuelle entre le réservoir de stabilisation et la cuve métallique, afin de permettre la décantation du liquide piégé dans le gaz combustible et son retour vers la cuve métallique.

18. Dispositif selon la revendication 1, comprenant en outre une vanne munie d'un manomètre situé dans une entrée pour prérégler un débit du liquide à une valeur prédéterminée.

19. Dispositif selon la revendication 1, dans lequel un courant électrique fourni aux électrodes est un courant continu.

20. Dispositif selon la revendication 1, dans lequel un courant électrique fourni aux électrodes est un courant alternatif.

21. Dispositif selon la revendication 1, dans lequel une polarité d'un courant électrique est délivrée par l'intermédiaire de contacts métalliques glissant avec une pression assistée par ressort sur les électrodes, lesdits contacts étant positionnés près des arcs électriques.

22. Dispositif selon la revendication 1, comprenant en outre une station de démagnétisation (121) pour supprimer les polarisations magnétiques acquises par les molécules desdits résidus liquides quand lesdites molécules de résidus liquides passent à travers les arcs électriques.

23. Dispositif selon la revendication 1, comprenant en outre une centrifugeuse (122) pour retirer les composants solides des résidus liquides recyclés.
